(19) Europäisches Patentamt / European Patent Office / Office européen des brevets

(11) **EP 4 708 977 A1**

(12) **EUROPEAN PATENT APPLICATION**
published in accordance with Art. 153(4) EPC

(43) Date of publication:
**11.03.2026  Bulletin 2026/11**

(21) Application number: **24806317.4**

(22) Date of filing: **25.04.2024**

(51) International Patent Classification (IPC):
*H04W 52/02* (2009.01)     *H04W 68/02* (2009.01)

(52) Cooperative Patent Classification (CPC):
Y02D 30/70

(86) International application number:
**PCT/CN2024/089749**

(87) International publication number:
**WO 2024/234961 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **12.05.2023  CN 202310541373**

(71) Applicant: **Huawei Technologies Co., Ltd.
Shenzhen, Guangdong 518129 (CN)**

(72) Inventors:
• **XIE, Xi
  Shenzhen, Guangdong 518129 (CN)**

• **WANG, Rui
  Shenzhen, Guangdong 518129 (CN)**
• **KUANG, Yiru
  Shenzhen, Guangdong 518129 (CN)**
• **CHANG, Junren
  Shenzhen, Guangdong 518129 (CN)**
• **ZHANG, Tingrui
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND APPARATUS**

(57)  This application provides a communication method and apparatus, to reduce power consumption of a terminal. The terminal receives a first wake-up signal. The first wake-up signal includes first indication information, the first indication information indicates that at least one first target terminal subgroup is to be woken up, and the at least one first target terminal subgroup includes a first terminal subgroup to which the terminal belongs. The terminal determines, based on the first indication information, that the terminal is to be woken up. After the terminal determines, based on the first wake-up signal, that the first terminal subgroup to which the terminal belongs is a terminal subgroup that needs to be woken up, the terminal is woken up. In a paging process, the terminal does not need to continuously monitor a paging occasion, but monitors an associated paging occasion after being woken up. This effectively reduces power consumption of the terminal.

FIG. 2

**Description**

CROSS-REFERENCE TO RELATED APPLICATIONS

This application claims priority to Chinese Patent Application No. 202310541373.9, filed with the China National Intellectual Property Administration on May 12, 2023 and entitled "COMMUNICATION METHOD AND APPARATUS", which is incorporated herein by reference in its entirety.

TECHNICAL FIELD

This application relates to the field of wireless communication technologies, and in particular, to a communication method and apparatus.

BACKGROUND

In a communication system, a network device may notify, through paging, a terminal in a radio resource control (radio resource control, RRC) idle mode (idle mode) or an RRC inactive mode (inactive mode) to receive a paging message (paging message).

Generally, when the network device needs to page the terminal, the network device sends paging downlink control information (downlink control information, DCI) on one or more paging occasions (paging occasion, PO). The terminal in the RRC idle mode or the RRC inactive mode monitors one PO of the terminal in each paging cycle (paging cycle), and receives the paging DCI sent by the network device. The terminal receives and decodes the paging message based on the paging DCI. After decoding the paging message, the terminal determines whether the paging message includes terminal identification information of the terminal. If the paging message includes the terminal identification information of the terminal, the terminal determines a subsequent operation based on other content in the paging message. If the paging message does not include the terminal identification information of the terminal, the terminal ignores the paging message. Therefore, for the terminal in the RRC idle mode or the RRC inactive mode, the terminal needs to continuously monitor paging, resulting in high power consumption of the terminal.

SUMMARY

This application provides a communication method and apparatus, to reduce power consumption of a terminal.

According to a first aspect, an embodiment of this application provides a communication method. The method may be performed by a terminal or a module (for example, a chip) used in the terminal. For example, the method is performed by the terminal. The method includes: The terminal receives a first wake-up signal, where the first wake-up signal includes first indication information, the first indication information indicates that at least one first target terminal subgroup is to be woken up, and the at least one first target terminal subgroup includes a first terminal subgroup to which the terminal belongs; and the terminal determines, based on the first indication information, that the terminal is to be woken up.

According to the foregoing method, after receiving the first wake-up signal and determining, based on the first indication information in the first wake-up signal, that the first terminal subgroup to which the terminal belongs is a terminal subgroup that needs to be woken up, the terminal is woken up. For example, in a paging process, the terminal does not need to continuously monitor a paging occasion, but monitors an associated paging occasion after being woken up. This effectively reduces power consumption of the terminal.

In a possible design, the first terminal subgroup is a terminal subgroup obtained through terminal identifier-based subgrouping. The terminal determines, based on first identification information of the terminal and a subgroup quantity corresponding to the first wake-up signal, the first terminal subgroup to which the terminal belongs.

According to the foregoing method, the terminal may determine, based on the first identification information and the subgroup quantity corresponding to the first wake-up signal, the first terminal subgroup to which the terminal belongs. This provides a solution in which the terminal determines the terminal subgroup to which the terminal belongs for the first wake-up signal. In this way, a terminal subgrouping mechanism is introduced. A network device may indicate, by using the first wake-up signal, a terminal subgroup that needs to be woken up, to reduce unnecessary paging monitoring by the terminal and reduce a paging false alarm.

In a possible design, the first identification information is a terminal identifier of the terminal, or the first identification information is identification information obtained by processing a terminal identifier of the terminal.

According to the foregoing method, the terminal may determine, based on the terminal identifier, the first terminal subgroup to which the terminal belongs, or based on a processed terminal identifier. In this way, when different subgrouping manners need to be used for different wake-up signals, different subgrouping manners can be implemented by performing different processing on the terminal identifier.

In a possible design, the terminal receives a second wake-up signal. The second wake-up signal includes second indication information, the second indication information indicates at least one second target terminal subgroup to monitor paging, and the at least one second target terminal subgroup includes a second terminal subgroup to which the terminal belongs. The terminal monitors paging based on the second indication information.

According to the foregoing method, a two-level wake-up mechanism may be used. After the terminal receives the first wake-up signal, the terminal is woken up. After receiving the second wake-up signal, the terminal monitors paging. The two wake-up signal mechanisms are combined for sending, so that a paging false alarm can be further reduced, unnecessary paging monitoring of the terminal can be reduced, and power consumption of the terminal can be reduced.

In a possible design, the second terminal subgroup is a terminal subgroup obtained through terminal identifier-based subgrouping. The terminal determines, based on second identification information of the terminal and a subgroup quantity corresponding to the second wake-up signal, the second terminal subgroup to which the terminal belongs.

According to the foregoing method, the terminal may determine, based on the second identification information and the subgroup quantity corresponding to the second wake-up signal, the second terminal subgroup to which the terminal belongs. This provides a solution in which the terminal determines the terminal subgroup to which the terminal belongs for the second wake-up signal. In this way, a terminal subgrouping mechanism is introduced. The network device may indicate, by using the second wake-up signal, a terminal subgroup that needs to monitor paging, to reduce unnecessary paging monitoring by the terminal and reduce a paging false alarm.

In a possible design, the second identification information is the terminal identifier of the terminal, or the second identification information is identification information obtained by processing the terminal identifier of the terminal.

According to the foregoing method, the terminal may determine, based on the terminal identifier, the second terminal subgroup to which the terminal belongs, or based on a processed terminal identifier. In this way, when different subgrouping manners need to be used for different wake-up signals, different subgrouping manners can be implemented by performing different processing on the terminal identifier.

In a possible design, the first terminal subgroup corresponds to a first subgroup identifier, and the first subgroup identifier satisfies:

$$\text{Subgroup ID1} = f(\text{UE\_ID1}/(N*Ns*K2)) \bmod K1+M1.$$

Subgroup ID1 is the first subgroup identifier, f() indicates a rounding operation, UE_ID1 is the first identification information, K1 is the subgroup quantity corresponding to the first wake-up signal, M1 is an offset parameter, N is the quantity of paging frames in the paging cycle of the terminal, Ns is a quantity of POs in one paging frame, and K2 is the subgroup quantity corresponding to the second wake-up signal or the preset value.

According to the foregoing method, a manner of accurately determining the terminal subgroup to which the terminal belongs for the first wake-up signal is provided. Based on the manner, terminal subgrouping can be performed for the first wake-up signal, so that the terminal subgrouping mechanism can be introduced for the first wake-up signal, to reduce unnecessary paging monitoring by the terminal and reduce a paging false alarm.

In a possible design, the first terminal subgroup corresponds to a first subgroup identifier, and the first subgroup identifier satisfies:

$$\text{Subgroup ID1} = f(\text{UE\_ID1}/(N*Ns)) \bmod K1+M1.$$

Subgroup ID1 is the first subgroup identifier, f() indicates a rounding operation, UE_ID1 is the first identification information, K1 is the subgroup quantity corresponding to the first wake-up signal, M1 is an offset parameter, N is a quantity of paging frames in a paging cycle of the terminal, and Ns is a quantity of POs in one paging frame.

According to the foregoing method, another manner of accurately determining the terminal subgroup to which the terminal belongs for the first wake-up signal is provided. Based on the manner, terminal subgrouping can be performed for the first wake-up signal, so that the terminal subgrouping mechanism can be introduced for the first wake-up signal, to reduce unnecessary paging monitoring by the terminal and reduce a paging false alarm.

In a possible design, the second terminal subgroup corresponds to a second subgroup identifier, and the second subgroup identifier satisfies:

$$\text{Subgroup ID2} = f(\text{UE\_ID2}/(N*Ns)) \bmod K2+M2.$$

Subgroup ID2 is the second subgroup identifier, f() indicates a rounding operation, UE_ID2 is the second identification information, K2 is the subgroup quantity corresponding to the second wake-up signal, M2 is an offset parameter, N is a quantity of paging frames in a paging cycle of the terminal, and Ns is a quantity of POs in one paging frame.

According to the foregoing method, a manner of accurately determining the terminal subgroup to which the terminal belongs for the second wake-up signal is provided. Based on the manner, terminal subgrouping can be performed for the second wake-up signal, so that the terminal subgrouping mechanism can be introduced for the second wake-up signal, to reduce unnecessary paging monitoring by the terminal and reduce a paging false alarm. In addition, the terminal may determine the first terminal subgroup and the second terminal subgroup in different manners, so that different terminal subgrouping can be implemented for the first wake-up signal and the second wake-up signal, to achieve a two-level wake-up effect, thereby further reducing a paging false alarm and power consumption of the terminal.

In a possible design, the second terminal subgroup corresponds to a second subgroup identifier, and the second subgroup identifier satisfies:

$$\text{Subgroup ID2}=f(\text{UE\_ID2}/(N*Ns*K1))\bmod K2+M2.$$

Subgroup ID2 is the second subgroup identifier, $f()$ indicates a rounding operation, UE_ID2 is the second identification information, K2 is the subgroup quantity corresponding to the second wake-up signal, M2 is an offset parameter, N is a quantity of paging frames in a paging cycle of the terminal, Ns is a quantity of POs in one paging frame, and K1 is the subgroup quantity corresponding to the first wake-up signal or a preset value.

According to the foregoing method, another manner of accurately determining the terminal subgroup to which the terminal belongs for the second wake-up signal is provided. Based on the manner, terminal subgrouping can be performed for the second wake-up signal, so that the terminal subgrouping mechanism can be introduced for the second wake-up signal, to reduce unnecessary paging monitoring by the terminal and reduce a paging false alarm. In addition, the terminal may determine the first terminal subgroup and the second terminal subgroup in different manners, so that different terminal subgrouping can be implemented for the first wake-up signal and the second wake-up signal, to achieve a two-level wake-up effect, thereby further reducing a paging false alarm and power consumption of the terminal.

In a possible design, when the first terminal subgroup and the second terminal subgroup are terminal subgroups obtained through terminal identifier-based subgrouping, the first identification information is different from the second identification information.

According to the foregoing method, different processing may be performed on the terminal identifier of the terminal, so that the first identification information is different from the second identification information. In this way, when both the first terminal subgroup and the second terminal subgroup are terminal subgroups obtained through terminal identifier-based subgrouping, different terminal subgroups may be obtained for different wake-up signals, to achieve a two-level wake-up effect, thereby further reducing a paging false alarm and power consumption of the terminal.

In a possible design, the subgroup quantity corresponding to the first wake-up signal is a subgroup quantity that corresponds to the first wake-up signal and that is obtained through terminal identifier-based subgrouping. Alternatively, the subgroup quantity corresponding to the first wake-up signal is a subgroup quantity, for one paging occasion PO, that corresponds to the first wake-up signal and that is obtained through terminal identifier-based subgrouping.

In a possible design, the subgroup quantity corresponding to the second wake-up signal is a subgroup quantity that corresponds to the second wake-up signal and that is obtained through terminal identifier-based subgrouping. Alternatively, the subgroup quantity corresponding to the second wake-up signal is a subgroup quantity, for one paging occasion PO, that corresponds to the second wake-up signal and that is obtained through terminal identifier-based subgrouping.

In a possible design, the first terminal subgroup is a terminal subgroup obtained through network device controlled subgrouping. The terminal receives first configuration information, where the first configuration information indicates the first terminal subgroup to which the terminal belongs.

According to the foregoing method, the terminal may determine, based on the first configuration information sent by the network device, the first terminal subgroup to which the terminal belongs. This provides a solution in which the terminal determines the terminal subgroup to which the terminal belongs based on network control. In this way, a terminal subgrouping mechanism is introduced. A network device may indicate, by using the first wake-up signal, a terminal subgroup that needs to be woken up, to reduce unnecessary paging monitoring by the terminal and reduce a paging false alarm.

In a possible design, the first configuration information includes the first subgroup identifier corresponding to the first terminal subgroup. Alternatively, the first configuration information includes first attribute information of the first terminal subgroup, where the first attribute information corresponds to the first subgroup identifier.

According to the foregoing method, the network device may flexibly indicate, in the first configuration information in a plurality of different manners, the terminal subgroup to which the terminal belongs for the first wake-up signal.

In a possible design, the second terminal subgroup is a terminal subgroup obtained through network device controlled subgrouping. The terminal receives second configuration information, where the second configuration information indicates the second terminal subgroup to which the terminal belongs.

According to the foregoing method, the terminal may determine, based on the second configuration information sent by the network device, the second terminal subgroup to which the terminal belongs. This provides a solution in which the terminal determines the terminal subgroup to which the terminal belongs based on network control. In this way, a terminal subgrouping mechanism is introduced. A network device may indicate, by using the second wake-up signal, a terminal subgroup that needs to be woken up, to reduce unnecessary paging monitoring by the terminal and reduce a paging false alarm.

In a possible design, the second configuration information includes the second subgroup identifier corresponding to the second terminal subgroup. Alternatively, the second configuration information includes second attribute information of the second terminal subgroup, where the second attribute information corresponds to the second subgroup identifier.

According to the foregoing method, the network device may flexibly indicate, in the second configuration information in a plurality of different manners, the terminal subgroup to which the terminal belongs for the second wake-up signal.

In a possible design, if the first terminal subgroup and the second terminal subgroup are terminal subgroups obtained through network device controlled subgrouping, the first terminal subgroup and the second terminal subgroup are obtained through division based on different features of the terminal or obtained based on different division granularities of a same feature of the terminal.

According to the foregoing method, when the first terminal subgroup and the second terminal subgroup are terminal subgroups obtained through network device controlled subgrouping, the network device may implement different terminal subgrouping for the first wake-up signal and the second wake-up signal, to achieve a two-level wake-up effect, thereby further reducing a paging false alarm and power consumption of the terminal.

In a possible design, the first terminal subgroup and the second terminal subgroup meet at least one of the following conditions:

A terminal included in the first terminal subgroup and a terminal included in the second terminal subgroup are not completely the same;

a first terminal included in the first terminal subgroup is not completely included in the second terminal subgroup; and
a second terminal included in the second terminal subgroup is not completely included in the first terminal subgroup.

According to the foregoing method, when the first terminal subgroup and the second terminal subgroup meet at least one of the foregoing conditions, and when the two wake-up signal mechanisms are combined for sending, because terminals included in terminal subgroups corresponding to two wake-up signals are not completely the same, and/or there is no inclusion relationship between terminal subgroups corresponding to two wake-up signals, a two-level wake-up effect can be implemented, thereby further reducing a paging false alarm and power consumption of the terminal.

In a possible design, the terminal receives the first wake-up signal by using a secondary communication module. The terminal determines that a main communication module of the terminal is to be woken up.

According to the foregoing method, when the terminal does not receive the first wake-up signal, the main communication module of the terminal may be in a sleep state. After receiving the first wake-up signal by using the secondary communication module, the main communication module is woken up, to reduce power consumption of the terminal.

According to a second aspect, an embodiment of this application provides a communication method. The method may be performed by a network device or a module (for example, a chip) used in the network device. For example, the method is performed by a network device. The method includes: The network device generates a first wake-up signal, where the first wake-up signal includes first indication information, the first indication information indicates that at least one first target terminal subgroup is to be woken up, and the at least one first target terminal subgroup includes a first terminal subgroup to which a terminal belongs; and the network device sends the first wake-up signal.

In a possible design, the first terminal subgroup is a terminal subgroup obtained through terminal identifier-based subgrouping. The first terminal subgroup to which the terminal belongs is determined based on third identification information of the terminal and a subgroup quantity corresponding to the first wake-up signal.

In a possible design, the third identification information is a terminal identifier of the terminal, or the third identification information is identification information obtained by processing a terminal identifier of the terminal.

In a possible design, the network device generates a second wake-up signal. The second wake-up signal includes second indication information, the second indication information indicates at least one second target terminal subgroup to monitor paging, and the at least one second target terminal subgroup includes a second terminal subgroup to which the terminal belongs. The network device sends the second wake-up signal.

In a possible design, the second terminal subgroup is a terminal subgroup obtained through terminal identifier-based subgrouping. The second terminal subgroup to which the terminal belongs is determined based on fourth identification information of the terminal and a subgroup quantity corresponding to the second wake-up signal.

In a possible design, the fourth identification information is a terminal identifier of the terminal, or the fourth identification information is identification information obtained by processing a terminal identifier of the terminal.

In a possible design, the first terminal subgroup corresponds to a first subgroup identifier, and the first subgroup identifier satisfies:

$$\text{Subgroup ID1} = f(\text{UE\_ID3}/(N*Ns*K2)) \bmod K1 + M1.$$

Subgroup ID1 is the first subgroup identifier, f() indicates a rounding operation, UE_ID3 is the third identification information, K1 is the subgroup quantity corresponding to the first wake-up signal, M1 is an offset parameter, N is a quantity of paging frames in a paging cycle of the terminal, Ns is a quantity of POs in one paging frame, and K2 is the subgroup quantity corresponding to the second wake-up signal or a preset value.

In a possible design, the first terminal subgroup corresponds to a first subgroup identifier, and the first subgroup identifier satisfies:

$$\text{Subgroup ID1} = f(\text{UE\_ID3}/(N*Ns)) \bmod K1 + M1.$$

Subgroup ID1 is the first subgroup identifier, f() indicates a rounding operation, UE_ID3 is the third identification information, K1 is the subgroup quantity corresponding to the first wake-up signal, M1 is an offset parameter, N is a quantity of paging frames in a paging cycle of the terminal, and Ns is a quantity of POs in one paging frame.

In a possible design, the second terminal subgroup corresponds to a second subgroup identifier, and the second subgroup identifier satisfies:

$$\text{Subgroup ID2} = f(\text{UE\_ID4}/(N*Ns)) \bmod K2 + M2.$$

Subgroup ID2 is the second subgroup identifier, f() indicates a rounding operation, UE_ID4 is the fourth identification information, K2 is the subgroup quantity corresponding to the second wake-up signal, M2 is an offset parameter, N is a quantity of paging frames in a paging cycle of the terminal, and Ns is a quantity of POs in one paging frame.

In a possible design, the second terminal subgroup corresponds to a second subgroup identifier, and the second subgroup identifier satisfies:

$$\text{Subgroup ID2} = f(\text{UE\_ID4}/(N*Ns*K1)) \bmod K2 + M2.$$

Subgroup ID2 is the second subgroup identifier, f() indicates a rounding operation, UE_ID4 is the fourth identification information, K2 is the subgroup quantity corresponding to the second wake-up signal, M2 is an offset parameter, N is a quantity of paging frames in a paging cycle of the terminal, Ns is a quantity of POs in one paging frame, and K1 is the subgroup quantity corresponding to the first wake-up signal or a preset value.

In a possible design, when the first terminal subgroup and the second terminal subgroup are terminal subgroups obtained through terminal identifier-based subgrouping, the third identification information is different from the fourth identification information.

In a possible design, the subgroup quantity corresponding to the first wake-up signal is a subgroup quantity that corresponds to the first wake-up signal and that is obtained through terminal identifier-based subgrouping. Alternatively, the subgroup quantity corresponding to the first wake-up signal is a subgroup quantity, for one paging occasion PO, that corresponds to the first wake-up signal and that is obtained through terminal identifier-based subgrouping.

In a possible design, the subgroup quantity corresponding to the second wake-up signal is a subgroup quantity that corresponds to the second wake-up signal and that is obtained through terminal identifier-based subgrouping. Alternatively, the subgroup quantity corresponding to the second wake-up signal is a subgroup quantity, for one paging occasion PO, that corresponds to the second wake-up signal and that is obtained through terminal identifier-based subgrouping.

In a possible design, the first terminal subgroup is a terminal subgroup obtained through network device controlled subgrouping. The network device sends first configuration information, where the first configuration information indicates the first terminal subgroup to which the terminal belongs.

In a possible design, the first configuration information includes the first subgroup identifier corresponding to the first terminal subgroup. Alternatively, the first configuration information includes first attribute information of the first terminal subgroup, where the first attribute information corresponds to the first subgroup identifier.

In a possible design, the second terminal subgroup is a terminal subgroup obtained through network device controlled subgrouping. The network device sends second configuration information, where the second configuration information indicates the second terminal subgroup to which the terminal belongs.

In a possible design, the second configuration information includes the subgroup identifier corresponding to the second terminal subgroup. Alternatively, the second configuration information includes second attribute information of the second terminal subgroup, where the second attribute information corresponds to the second subgroup identifier.

In a possible design, if the first terminal subgroup and the second terminal subgroup are terminal subgroups obtained through network device controlled subgrouping, the first terminal subgroup and the second terminal subgroup are obtained through division based on different features of the terminal or obtained based on different division granularities of a same feature of the terminal.

In a possible design, the first terminal subgroup and the second terminal subgroup meet at least one of the following conditions:

A terminal included in the first terminal subgroup and a terminal included in the second terminal subgroup are not completely the same;

a terminal included in the first terminal subgroup is not completely included in the second terminal subgroup; and a terminal included in the second terminal subgroup is not completely included in the first terminal subgroup.

According to a third aspect, this application further provides a communication apparatus. The communication apparatus has a function of implementing the method according to any one of the first aspect or the possible designs of the first aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus in performing a corresponding function of the terminal the foregoing method. The communication apparatus may further include a memory (or a storage medium). The memory may be coupled to the processor, and the memory stores program instructions and data that are necessary for the communication apparatus. Optionally, the communication apparatus further includes an interface circuit. The interface circuit is configured to support communication between the communication apparatus and a device such as the network device. The interface circuit may alternatively be a transceiver. The transceiver may include a transmitter and a receiver. The transmitter and the receiver may be different components, or may be a same component but can implement different functions.

In a possible design, the communication apparatus includes corresponding function modules respectively configured to implement the steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method according to the first aspect. Details are not described herein again. The communication unit (or the communication module) may alternatively be a transceiver unit (or a transceiver module). The transceiver unit may include a sending unit and a receiving unit. The sending unit and the receiving unit may be different units, or may be a same unit but can implement different functions.

The communication apparatus may be a terminal, or a chip or a chip system in the terminal. If the communication apparatus is a terminal, the transceiver may be a radio frequency transceiver component in the terminal. If the communication apparatus is a chip or a chip system disposed in the terminal, the transceiver may be a communication interface in the chip or the chip system. The communication interface is connected to a radio frequency transceiver component in the terminal, to implement information sending and receiving through the radio frequency transceiver component.

According to a fourth aspect, this application further provides a communication apparatus. The communication apparatus has a function of implementing the method according to any one of the second aspect or the possible designs of the second aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus in performing a corresponding function of the network device in the foregoing method. The communication apparatus may further include a memory (or a storage medium). The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal. The interface circuit may alternatively be a transceiver. The transceiver may include a transmitter and a receiver. The transmitter and the receiver may be different components, or may be a same component but can implement different functions.

In a possible design, the communication apparatus includes corresponding function modules respectively configured to implement the steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method according to the second aspect. Details are not described herein again. The communication unit (or the communication module) may alternatively be a transceiver unit (or a transceiver module). The transceiver unit may include a sending unit and a receiving unit. The sending unit and the receiving unit may be different units, or may be a same unit but can implement different functions.

The communication apparatus may be a network device or a chip or a chip system in the network device. If the communication apparatus is a network device, the transceiver may be a radio frequency transceiver component in the network device. If the communication apparatus is a chip or a chip system disposed in the network device, the transceiver may be a communication interface in the chip or the chip system. The communication interface is connected to a radio frequency transceiver component in the network device, to implement information sending and receiving through the radio frequency transceiver component.

According to a fifth aspect, a computer-readable storage medium is provided. The computer-readable storage medium stores a computer program or instructions. When the computer program or the instructions are executed by a processor, the method according to any one of the first aspect or the possible designs of the first aspect, or the method according to any one of the second aspect or the possible designs of the second aspect is implemented.

According to a sixth aspect, a computer program product storing instructions is provided. When the instructions are run by a processor, the method according to any one of the first aspect or the possible designs of the first aspect, or the method according to any one of the second aspect or the possible designs of the second aspect is implemented.

According to a seventh aspect, a communication apparatus is provided. The communication apparatus includes a processor. The processor is configured to implement the method according to any one of the first aspect or the possible designs of the first aspect, or implement the method according to any one of the second aspect or the possible designs of the second aspect is implemented. In addition, the communication apparatus may further include a storage medium. The storage medium stores instructions. When the instructions are executed by the processor, the method according to any one of the first aspect or the possible designs of the first aspect, or the method according to any one of the second aspect or the possible designs of the second aspect is implemented. The communication apparatus may be a chip or a chip system. The chip system may include a chip, or may include a chip and another discrete component.

According to an eighth aspect, a communication system is provided. The communication system includes the first terminal device according to the first aspect and the network device according to the second aspect.

For each of the third aspect to the eighth aspect and technical effects that can be achieved by the aspect, refer to the foregoing descriptions of the technical effects that can be achieved by the first aspect, the possible solutions in the first aspect, the second aspect, or the possible solutions in the second aspect. Details are not described herein again.

BRIEF DESCRIPTION OF DRAWINGS

FIG. 1 is a diagram of a structure of a communication system according to an embodiment of this application;
FIG. 2 is a flowchart of a communication method according to an embodiment of this application;
FIG. 3 is a diagram of a working principle of an LP-WUS according to an embodiment of this application;
FIG. 4 is a flowchart of a communication method according to an embodiment of this application;
FIG. 5 is a schematic flowchart of receiving an LP-WUS and a PEI by a terminal according to an embodiment of this application;
FIG. 6 is a diagram of a structure of a communication apparatus according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a communication apparatus according to an embodiment of this application.

DESCRIPTION OF EMBODIMENTS

The technical solutions provided in embodiments of this application may be applied to the fifth generation (the fifth generation, 5G) mobile communication system (for example, a 5G new radio (new radio, NR) system), or applied to a long term evolution (long term evolution, LTE) system, or may be applied to a next-generation mobile communication system, for example, a 6G mobile communication system or another similar communication system. The another similar communication systems include, for example: vehicle to everything (vehicle to everything, V2X), an internet of things (internet of things, IoT) system, and a narrow band internet of things (narrow band internet of things, NB-IoT) system. The IoT may be understood as IoT or a wearable Wi-Fi network based on wireless fidelity (wireless fidelity, Wi-Fi). The wearable Wi-Fi network may be a Wi-Fi network includes a terminal device (for example, a mobile phone), which is used as a virtual access point, and an associated wearable device. In embodiments of this application, the 5G mobile communication system is used as an example for description. When the technical solutions in embodiments of this application are applied to another communication system, devices, components, modules, and the like in embodiments may be replaced with corresponding devices, components, and modules in the another communication system. This is not limited.

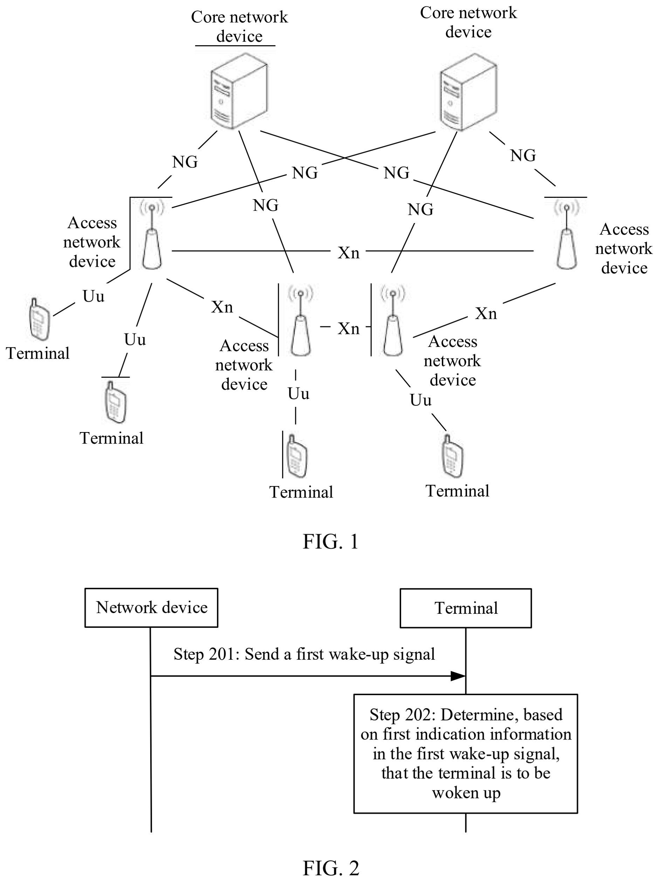

Refer to FIG. 1. A communication system applicable to an embodiment of this application is shown. A 5G mobile communication system is used as an example, and may include a network device and at least one terminal. The network device may include a core network device and an access network device. For example, the network device includes a 5G core network (for example, a 5GC) and a 5G access network (for example, an NG-RAN) shown in FIG. 1. An access and mobility management function (access and mobility management function, AMF) and a user plane function (user plane function, UPF) are two network elements in the 5GC. A gNB (namely, a 5G base station) and an ng-eNB (namely, a 4G base station connected to the 5GC) are two network elements in the NG-RAN. A serving base station gNB of the terminal is responsible for providing a user plane protocol function and a control plane protocol function in 5G NR for the terminal. A serving base station ng-eNB of the terminal is responsible for providing a user plane protocol function and a control plane protocol function in LTE for the terminal.

The terminal in embodiments of this application may be a wireless terminal device that can receive scheduling and indication information from the network device. The terminal may be a device that provides a user with voice and/or data connectivity, or a handheld device having a wireless connection function, or another processing device connected to a wireless modem. In embodiments of this application, an apparatus configured to implement a function of the terminal may be a terminal, may be a module or a unit that can be used in the terminal, or may be an apparatus, for example, a chip system, that can support the terminal in implementing the function. The apparatus may be mounted in the terminal or used in collaboration with the terminal.

The terminal may also be referred to as a terminal device, user equipment (user equipment, UE), a mobile station (mobile station, MS), a mobile terminal (mobile terminal, MT), or the like. The terminal is a device that includes a wireless communication function (providing a user with voice/data connectivity), for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be an in-vehicle device, an entire vehicle device, an in-vehicle module, a vehicle, or the like. The wireless terminal in industrial control may be a camera, a robot, or the like. The wireless terminal in the smart home may be a television, an air conditioner, a sweeper, a speaker, a set-top box, or the like.

An access network device in embodiments of this application may be a device in a wireless network. For example, the access network device may be a device that is deployed in a radio access network and that provides a wireless communication function for the terminal. For example, the access network device may be a radio access network (radio access network, RAN) node that connects the terminal to the wireless network. In embodiments of this application, an apparatus configured to implement a function of the access network device may be an access network device, may be a module or a unit that can be used in the access network device, or may be an apparatus, for example, a chip system, that can support the access network device in implementing the function. The apparatus may be mounted in the access network device or used in collaboration with the access network device.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like, or may be a network device in a 5G mobile communication system, for example, a next generation NodeB (next generation NodeB, gNB), a transmission reception point (transmission reception point, TRP) or a TP in an NR system; or one or one group of antenna panels (including a plurality of antenna panels) of a base station in a 5G mobile communication system. Alternatively, the network device may be a network node that forms a gNB or a transmission point, for example, a BBU, a distributed unit (distributed unit, DU), or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control RRC layer and a packet data convergence protocol (packet data convergence protocol, PDCP) layer. The DU is responsible for processing a physical layer protocol and a real-time service, and performing functions of a radio link control (radio link control, RLC) layer, a MAC layer, and a physical (physical, PHY) layer. The AAU implements some physical layer processing functions, radio frequency processing, and a function related to an active antenna. The information at the RRC layer is finally changed to the information at the PHY layer, or is changed from the information at the PHY layer. Therefore, in this architecture, the higher layer signaling (for example, the RRC layer signaling) may also be considered to be sent by the DU, or sent by the DU and the AAU. It may be understood that the network device may be a device including one or more of a CU node, a DU node, and an AAU node. In addition, the CU may be classified as a network device in the RAN, or the CU may be classified as a network device in a core network (core network, CN). This is not limited in this application.

In a possible scenario, a plurality of RAN devices (or referred to as RAN nodes) cooperatively assist a terminal in implementing wireless access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may alternatively be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, the core network device serves as an interface provided by a bearer network to a data network (data network, DN), and provides a communication connection, authentication, management, and policy control for the terminal device, bears a data service, and the like. The core network device may include the following network elements: a session management function (session management function, SMF) network element, an AMF network element, a unified data management (unified data management, UDM) function network element, an authentication server function (authentication server function, AUSF) network element, a policy control function (policy control function, PCF) network element, a user plane function (user plane function, UPF) network element, a network slice selection function (network slice selection function, NSSF) network element, a network exposure function (network exposure function, NEF) network element, a network repository function (network repository function, NRF) network element, an application function (application function, AF) network element, and the like. It should be noted that the CN may include one or more CN devices. The CN device may be a network element configured to perform the foregoing single network function, or may be a network element configured to perform the foregoing plurality of network functions. When one CN device is configured to perform the plurality of network functions, the CN device may include one or more functional modules configured to perform the plurality of network functions. The functional module may be a software module, or may be a software/hardware module. This is not limited in embodiments of this application.

In this application, the "indication" may include a direct indication, an indirect indication, an explicit indication, and an implicit indication. When a piece of indication information is described as indicating A, it may be understood that the indication information carries A, directly indicates A, or indirectly indicates A.

In this application, that a signal includes indication information may mean that the signal carries content of indication information such as an information element or a field (for example, the signal is DCI or a signal with an OOK waveform or an FSK waveform, and the DCI, the OOK waveform, or the FSK waveform has an information bit), or the signal itself indicates indication information (for example, the signal is a sequence, different sequences represent different meanings and are used to transmit different information, and current indication information may be represented based on a sequence that currently appears).

In this application, "wake-up" may mean turning on a main circuit of a terminal, or a main circuit out of a sleep state, or a main circuit entering a wake-up state, or the like. The main circuit may also be referred to as a main link, a main communication module, or the like.

In this application, a "preset value" may also be referred to as a default value, a constant, a constant value, or the like.

In this application, terms such as "first" and "second" are only used for distinction and description, but cannot be understood as indication or implication of relative importance, and cannot be understood as an indication or implication of a sequence.

In this application, "at least one of the following" or a similar expression indicates any combination of the listed items. For example, "at least one of A, B, and/or C" may indicate: only A exists, only B exists, only C exists, both A and B exist, both B and C exist, and both A and C exist, where A, B, and C each may be one or more.

In the communication system, the network device may notify, through paging, the terminal in an RRC idle mode or an RRC inactive mode to receive a paging message. The network device may be an access network device or a core network device. For example, the access network device initiates paging (also referred to as RAN paging), and the access network device may initiate paging to the terminal in the RRC inactive mode. For another example, the core network device initiates paging (also referred to as core network (core network, CN) paging), and the core network device may initiate paging to the terminal in the RRC idle mode or the RRC inactive mode. It may be understood that, during CN paging, the core network device indicates the access network device to initiate paging to the terminal in the RRC idle mode. After receiving the indication of the core network device, the access network device initiates CN paging to the terminal in the RRC idle mode.

The terminal in the RRC idle mode or the RRC inactive mode monitors a PO of the terminal in each paging cycle (paging cycle) to determine whether the network device performs paging. As shown in a diagram of a paging cycle and a paging occasion in FIG. 1, one paging cycle includes one PO, and one PO may correspond to one or more terminals. In other words, one or more terminals may monitor a same PO. In an implementation, the terminal may calculate a PO location of the terminal based on identification information of the terminal and a paging-related parameter. PO locations calculated by different UE may be the same or different.

A basic paging procedure is as follows: The network device may select a specific paging range, namely, an area in which paging is sent (also referred to as a paging area). For example, for the terminal in the RRC idle mode, the network device may use a registration area (registration area) to which the terminal belongs as the paging area. For the terminal in the RRC inactive mode, the network device may use a RAN-based notification area (RAN-based notification area, RNA) to which the terminal belongs as the paging area.

Generally, when the network device needs to page the terminal, the network device sends paging downlink control information (downlink control information, DCI) (which may also be referred to as paging indication information in this specification) on one or more paging occasions (paging occasion, PO), to indicate a resource carrying a paging message. The terminal receives/monitors (monitor)/detects (detect) the paging DCI in one or more POs in one paging cycle, to receive the paging message, and determine whether the network device pages the terminal.

The paging DCI may include scheduling information (including time-frequency domain information and other scheduling information of a resource for scheduling a paging message) of the paging message and/or a short message (short message). The scheduling information is used to schedule the paging message. For example, the scheduling information includes time-frequency resource information of the paging message or modulation and coding information. The short message may indicate a system information update indicator (that is, whether system information changes), an earthquake and tsunami warning system (earthquake and tsunami warning system, ETWS) notification, a commercial mobile alert service (commercial mobile alert service, CMAS) notification, or the like. For example, specific content is shown in the following Table 1:

Table 1

| Bit field (bit field) | Definition |
|---|---|
| Short message indicator (short message indicator) | [2 bits], indicating a content type in current DCI: "01" indicates that only the scheduling information for a paging message exists; "10" indicates that only the short message exists; "11" indicates that both the scheduling information for the paging message and the short message exist; and "00" indicates reserved bits (that is, this value is not used) |
| Short message (short message) | [8 bits], indicating the system information update indicator, the earthquake and tsunami warning notification, or the commercial mobile alert service notification |
| Frequency domain resource assignment (frequency domain resource assignment) | [Calculate an occupied bit based on a related parameter], indicating a frequency domain resource location of the paging message |
| Time domain resource assignment (time domain resource assignment) | [4 bits], indicating a time domain resource location of the paging message |
| Others | [1+5+2 bits], indicating other scheduling information |

(continued)

| Bit field (bit field) | Definition |
|---|---|
| Reserved | [6 bits], indicating reserved bits, namely, bits that are not used temporarily |

After receiving the paging DCI sent by the network device, the terminal determines a subsequent operation based on content of the paging DCI.

For example, if the paging DCI includes the scheduling information of the paging message, the terminal receives and decodes the paging message on a physical downlink shared channel (physical downlink shared channel, PDSCH) based on the scheduling information, and then determines the subsequent operation based on content of the paging message. If the paging DCI includes the short message, the terminal receives at least one of updated system information, an earthquake and tsunami warning, and a commercial mobile alert based on the indicator of the short message. If the paging DCI includes the scheduling information of the paging message and the short message, the terminal receives the paging message and at least one of updated system information, an earthquake and tsunami warning, and a commercial mobile alert based on a specified procedure.

The paging message includes terminal identification information of one or more terminals paged by the network device and/or access type information of the paged terminal. After decoding the paging message, the terminal determines whether the paging message includes terminal identification information of the terminal. If the paging message includes the terminal identification information of the terminal, the terminal determines the subsequent operation based on other content in the paging message. If the paging message does not include the terminal identification information of the terminal, the terminal ignores the paging message, resulting in a paging false alarm problem.

A paging false alarm (false alarm) problem existing in a paging mechanism is that after receiving and decoding the paging message, the terminal finds that the network device actually does not page the terminal. A cause of the paging false alarm is that when a plurality of terminals monitor a same PO, the terminal obtains only scheduling information of a paging message when receiving paging DCI, and cannot determine whether the paging message is a paging message for the terminal. Only after receiving and decoding the paging message on the PDSCH subsequently, the terminal can determine, based on terminal identification information in the paging message, whether the paging is for the terminal. Therefore, for a terminal that is not actually paged, unnecessary PDSCH receiving and decoding exist, and unnecessary power consumption of the terminal is caused.

Currently, terminal subgrouping is one of mechanisms that can reduce paging false alarms. Specifically, terminals monitoring a same PO may be subgrouped, and the terminals monitoring the same PO may be divided into different terminal subgroups. The network device may send a wake-up signal before the PO or on the PO, and indicate, by using the wake-up signal, a terminal subgroup to which a terminal that is currently paged belongs. After receiving the wake-up signal, the terminal determines, based on the to-be-woken-up terminal subgroup indicated by the wake-up signal, whether a terminal in the terminal subgroup needs to monitor the PO or receive a paging message subsequently, to avoid unnecessary paging monitoring by the terminal. For example, if the network device pages a terminal 1, and a terminal subgroup to which the terminal 1 belongs is a subgroup 2, the network device may send a wake-up signal before a PO, to indicate that a terminal in the subgroup 2 needs to monitor the associated PO. When receiving the wake-up signal, the terminal can determine, based on the wake-up signal, whether current paging is for the terminal subgroup to which the terminal belongs. If current paging is for the terminal subgroup to which the terminal belongs, the terminal monitors the PO, and receives and decodes the paging message based on an original mechanism. Otherwise, if current paging is not for the terminal subgroup to which the terminal belongs, the terminal no longer monitors the PO or receives paging. The terminal subgrouping mechanism can reduce a probability that the terminal receives paging unnecessarily, and further reduce additional power consumption of the terminal. However, currently, there is no terminal subgrouping solution for the wake-up signal.

As shown in FIG. 2, a communication method provided in an embodiment of this application may specifically include the following steps.

Step 201: A network device sends a first wake-up signal.

The first wake-up signal includes first indication information, and the first indication information indicates that at least one first target terminal subgroup is to be woken up.

When a terminal needs to be woken up, the network device sends the first wake-up signal. The first wake-up signal includes a terminal subgroup to which the to-be-woken-up terminal belongs (which may be referred to as a first target terminal subgroup).

In this embodiment of this application, the first wake-up signal may also be described as first wake-up signaling, first wake-up information, or the like.

The first wake-up signal in this embodiment of this application may be an ultra-low-power wake-up signal (low-power wake-up signal, LP-WUS) or a paging early indication (paging early indication, PEI).

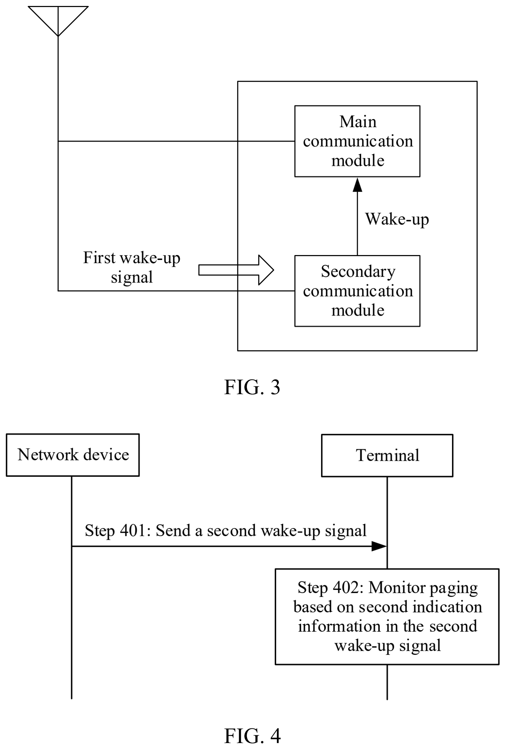

A working principle of the LP-WUS may be as follows: A dedicated receiver is disposed in a terminal to detect and process a wake-up signal. As shown in FIG. 3, the terminal includes a main communication module and a secondary communication module. The secondary communication module may be a dedicated receiver for detecting and processing a wake-up signal. The secondary communication module may also be referred to as an ultra-low-power wake-up receiver (low-power wake-up receiver, LR or LP-WUR), an ultra-low-power wake-up module (low-power wake-up module), an ultra-low-power wake-up circuit/link, a secondary circuit/link, or the like. When there is no data or service transmission, the main communication module (which may also be referred to as a main circuit/link (main radio, MR)) of the terminal may remain in a disabled or sleep state, to greatly reduce "standby" power consumption of the terminal. The secondary communication module is responsible for monitoring the wake-up signal, and wakes up the main communication module after receiving a wake-up indication, to perform data or service transmission. In addition, in addition to monitoring paging, the secondary communication module may complete or perform another operation.

When the terminal needs to be woken up, the network device sends an ultra-low-power wake-up signal (low-power wake-up signal, LP-WUS) to the terminal. After detecting or receiving the LP-WUS (for the terminal), the secondary communication module of the terminal wakes up the main communication module. For a terminal that supports both an LP-WUS mechanism and a PEI mechanism, after a main communication module is woken up, the terminal may monitor a PEI, and determine, based on a receiving status and/or indication content of the PEI, whether to monitor paging. For a terminal that supports only an LP-WUS mechanism, after a main communication module is woken up, the main communication module monitors paging.

In an implementation, the network device may indicate, by using the first wake-up signal, that the terminal in the at least one first target terminal subgroup is to be woken up.

Optionally, the first indication information may include subgroup-related information, and the subgroup-related information indicates a first target terminal subgroup for which current wake-up is performed. For example, the subgroup-related information may be a subgroup indication (subgroup indication). The subgroup indication may be a bitmap, and each bit corresponds to one subgroup. When a terminal in a subgroup is woken up, the network device sets a bit corresponding to the subgroup to 1, and sets a bit corresponding to another subgroup that is not woken up to 0. For example, terminal subgroups corresponding to the first wake-up signal include a terminal subgroup 1, a terminal subgroup 2, a terminal subgroup 3, and a terminal subgroup 4. It is assumed that the network device determines that woken up terminals belong to the terminal subgroup 1 and the terminal subgroup 2. In this case, the subgroup indication carried in the first indication information may be 1100. Alternatively, the subgroup indication may be a codepoint, and different subgroups correspond to different bit combinations. For example, 00 indicates a terminal subgroup 1, 01 indicates a terminal subgroup 2, 10 indicates a terminal subgroup 3, and 11 indicates a terminal subgroup 4. If the terminal subgroup 1 and the terminal subgroup 2 need to be woken up, the subgroup indication carried in the first wake-up signal may be 0001.

Optionally, the first wake-up signal may be of a sequence (sequence) type. Different sequences represent different terminal subgroup information. For example, a sequence 1 corresponds to a terminal subgroup 1, and a sequence 2 corresponds to a terminal subgroup 2. Optionally, the first wake-up signal may further be a particular sequence, and the particular sequence corresponds to all terminal subgroups or a plurality of designated terminal subgroups. When the first wake-up signal sent by the network device is the particular sequence, it indicates that the network device needs to wake up all the terminal subgroups or the plurality of designated terminal subgroups corresponding to the particular sequence.

For example, the network device in step 201 may be an access network device.

Step 202: The terminal determines, based on the first indication information in the first wake-up signal, that the terminal is to be woken up.

The at least one first target terminal subgroup that is indicated by the first indication information and that is to be woken up includes a first terminal subgroup to which the terminal belongs.

In an implementation, after receiving the first wake-up signal, the terminal determines, based on the at least one first target terminal subgroup that is indicated by the first indication information and that is to be woken up, whether the at least one first target terminal subgroup includes the first terminal subgroup to which the terminal belongs. If the at least one first target terminal subgroup includes the first terminal subgroup to which the terminal belongs, the terminal determines that the terminal needs to be woken up.

The first wake-up signal in this embodiment of this application may be an LP-WUS. In an implementation, the terminal may receive the first wake-up signal by using the secondary communication module. The main communication module of the terminal is woken up when it is determined, based on the first indication information in the first wake-up signal, that the at least one first target terminal subgroup that is indicated by the first indication information and that is to be woken up includes the first terminal subgroup to which the terminal belongs.

In a possible implementation, after the main communication module of the terminal is woken up, the terminal may monitor a PEI or monitor paging by using the main communication module.

In addition, the first wake-up signal in this embodiment of this application may be another type of wake-up signal. After the terminal is woken up, the terminal may monitor paging, or the terminal may receive data or perform service transmission.

An embodiment of this application further provides a communication method. As shown in FIG. 4, the method may specifically include the following steps.

Step 401: A network device sends a second wake-up signal.

The second wake-up signal includes second indication information, and the second indication information indicates at least one second target terminal subgroup to monitor paging.

When paging a terminal, the network device sends the second wake-up signal. The second wake-up signal includes a terminal subgroup to which the terminal indicated to monitor paging belongs.

In this embodiment of this application, the second wake-up signal may also be described as first wake-up signaling, second wake-up information, or the like.

The second wake-up signal in this embodiment of this application may be a PEI or an LP-WUS.

In an implementation, the network device may indicate, by using the second wake-up signal, the terminal in the at least one second target terminal subgroup to monitor paging.

Optionally, the second indication information may include subgroup-related information, and the subgroup-related information indicates a second target terminal subgroup for which current paging is performed. For example, the subgroup-related information may be a subgroup indication (subgroup indication). The subgroup indication may be a bitmap, and each bit corresponds to one subgroup. When a terminal in a subgroup is paged, the network device sets a bit corresponding to the subgroup to 1, and sets a bit corresponding to another subgroup that is not paged to 0. For example, terminal subgroups corresponding to the second wake-up signal include a terminal subgroup 1, a terminal subgroup 2, a terminal subgroup 3, and a terminal 4. It is assumed that the network device determines that a paged terminal belongs to the terminal subgroup 2. In this case, the subgroup indication carried in the second indication information may be 0100. Alternatively, the subgroup indication may be a codepoint, and different subgroups correspond to different bit combinations. For example, 00 indicates the terminal subgroup 1, 01 indicates the terminal subgroup 2, 10 indicates the terminal subgroup 3, and 11 indicates the terminal subgroup 4. If the terminal subgroup 1 and the terminal subgroup 2 need to be woken up, the subgroup indication carried in the second wake-up signal may be 0001.

Optionally, the second wake-up signal may be of a sequence (sequence) type. Different sequences represent different terminal subgroup information. For example, a sequence 1 corresponds to the terminal subgroup 1, and a sequence 2 corresponds to the terminal subgroup 2. Optionally, the second wake-up signal may further be a particular sequence, and the particular sequence corresponds to all terminal subgroups or a plurality of designated terminal subgroups. When the second wake-up signal sent by the network device is the particular sequence, it indicates that the network device needs to wake up all the terminal subgroups or the plurality of designated terminal subgroups corresponding to the particular sequence.

For example, the network device in step 401 may be an access network device.

Step 402: The terminal monitors paging based on the second indication information in the second wake-up signal.

The at least one second target terminal subgroup that is indicated by the second indication information and that monitors paging includes a second terminal subgroup to which the terminal belongs.

In an implementation, after receiving the second wake-up signal, the terminal determines, based on the at least one second target terminal subgroup that is indicated by the second indication information and that monitors paging, whether the at least one second target terminal subgroup includes the second terminal subgroup to which the terminal belongs. If the at least one second target terminal subgroup includes the second terminal subgroup to which the terminal belongs, the terminal determines that the terminal needs to monitor paging.

Optionally, the second wake-up signal in this embodiment of this application may be a PEI.

It should be noted that the communication method shown in FIG. 2 and the communication method shown in FIG. 4 in embodiments of this application may be combined. An optional implementation is as follows: First, the communication procedure shown in FIG. 2 (step 201 and step 202) is performed, and the terminal is woken up; and then, the communication procedure shown in FIG. 4 (step 401 and step 402) is performed, and the terminal monitors paging. For example, the first wake-up signal may be an LP-WUS, and the second wake-up signal may be a PEI.

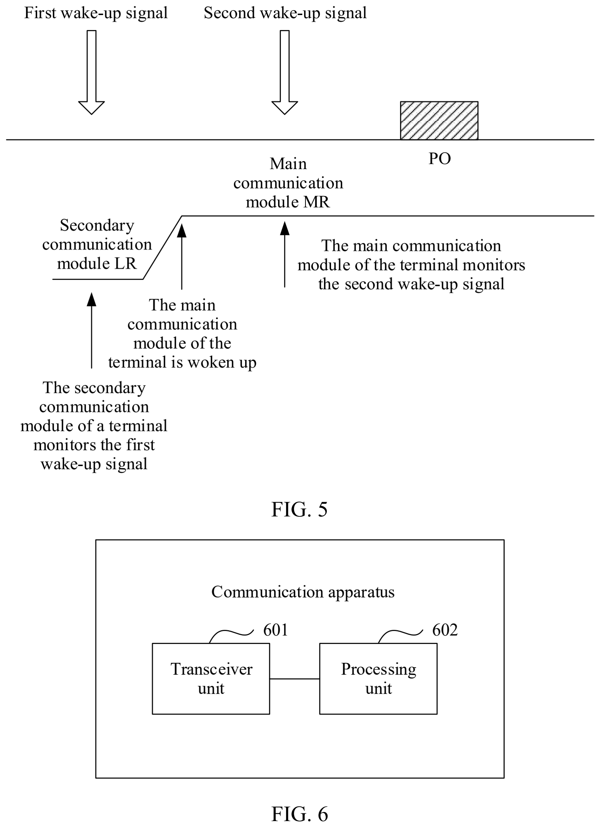

For a terminal that supports both the LP-WUS mechanism and the PEI mechanism, as shown in FIG. 5, a secondary communication module of the terminal monitors the LP-WUS. After detecting that the LP-WUS indicates that the terminal needs to be woken up to monitor a PO, a main communication module of the terminal is woken up. The main communication module of the terminal monitors the PEI. The terminal finally determines, based on a receiving status and/or indication content of the PEI, whether to monitor the PO. In an implementation, if the secondary communication module of the terminal detects the LP-WUS and determines, based on the first indication information in the LP-WUS, that the terminal is to be woken up, the main communication module of the terminal is woken up and monitors the PEI. If the main communication module of the terminal detects the PEI and determines, based on the second indication information in the PEI, that the terminal is to monitor the PO, the main communication module of the terminal monitors paging on the associated PO.

For a terminal that supports only the LP-WUS mechanism, a secondary communication module of the terminal monitors the LP-WUS. After detecting that the LP-WUS indicates that the terminal needs to be woken up to monitor the PO, a main communication module of the terminal is woken up, and the main communication module of the terminal monitors paging on the associated PO.

For a terminal that supports only the PEI mechanism, the terminal monitors the PEI, and determines, based on the receiving status and/or indication content of the PEI, whether to monitor the PO.

In this embodiment of this application, terminals may be separately subgrouped based on the first wake-up signal and the second wake-up signal. When sending the first wake-up signal, based on a terminal subgroup corresponding to the first wake-up signal, the network device may indicate, by using the first wake-up signal, a first target terminal subgroup that needs to be woken up. When sending the second wake-up signal, based on a terminal subgroup corresponding to the second wake-up signal, the network device may indicate, by using the second wake-up signal, a second target terminal subgroup that needs to monitor paging.

In an implementation, on a terminal side, the terminal may determine, before receiving the first wake-up signal, the first terminal subgroup to which the terminal belongs for the first wake-up signal, or determine, after receiving the first wake-up signal, the first terminal subgroup to which the terminal belongs for the first wake-up signal. Correspondingly, on a network device side, the network device determines, before generating the first wake-up signal, terminal subgroups to which terminals belong for the first wake-up signal.

Correspondingly, on the terminal side, the terminal may determine, before receiving the second wake-up signal, the second terminal subgroup to which the terminal belongs for the second wake-up signal, or determine, after receiving the second wake-up signal, the second terminal subgroup to which the terminal belongs for the second wake-up signal. Correspondingly, on the network device side, the network device determines, before generating the second wake-up signal, terminal subgroups to which terminals belong for the second wake-up signal.

The following describes in detail a terminal subgrouping method in embodiments of this application.

### 1. A terminal subgrouping method for the first wake-up signal

For the first wake-up signal, a terminal subgrouping mechanism may include terminal identifier-based subgrouping (UE ID-based subgrouping) and network controlled subgrouping. Network controlled subgrouping may be CN controlled subgrouping (CN controlled subgrouping). A CN (for example, an AMF) is responsible for allocating a subgroup identifier of a subgroup to a terminal, and the subgroup identifier may be referred to as a CN subgroup ID. Terminal subgrouping based on a terminal identifier may be referred to as UE_ID subgrouping for short, and UE subgrouping controlled by the CN may be referred to as CN subgrouping for short.

For the first wake-up signal, one cell may support two subgrouping mechanisms. For example, the cell supports both terminal identifier-based subgrouping and network controlled subgrouping. Alternatively, one cell may support only one of the two subgrouping mechanisms. The terminal may determine a supporting status of a subgrouping mechanism in the current cell based on a subgroup-related parameter broadcast by the cell.

The following separately describes different subgrouping manners corresponding to the first wake-up signal.

(1) Terminal identifier-based subgrouping

In an implementation, in this embodiment of this application, for the first wake-up signal, the terminal side and the network device side need to determine a subgrouping status of terminal subgroups. For the terminal side, for the first wake-up signal, the terminal determines the first terminal subgroup to which the terminal belongs. For the network device side, for the first wake-up signal, the network device determines a terminal subgroup to which each terminal belongs, so that terminals included in each terminal subgroup can be further determined. The following separately provides descriptions.

1. For the first wake-up signal, the terminal determines the first terminal subgroup to which the terminal belongs.

Optionally, the terminal determines, based on first identification information of the terminal and a subgroup quantity corresponding to the first wake-up signal, the first terminal subgroup to which the terminal belongs.

The first identification information of the terminal may be a terminal identifier of the terminal, or the first identification information may be identification information obtained by processing a terminal identifier of the terminal.

For example, the terminal identifier of the terminal may be a 5G S-temporary mobile subscription identifier (5G s-temporary mobile subscription identifier, 5G-S-TMSI), an international mobile subscriber identity (international mobile subscriber identity, IMSI), or the like.

In an implementation, for a case in which the first identification information is the identification information obtained by processing the terminal identifier of the terminal, in this embodiment of this application, the terminal identifier of the terminal may be processed in a plurality of different manners to obtain the first identification information of the terminal.

For example, a modulo operation may be performed on the terminal identifier of the terminal to obtain the first identification information of the terminal. For example, UE_ID1=id mod X, where id is the terminal identifier of the terminal, for example, the 5G-S-TMSI or the IMSI, X is a constant, and a value of X may be a preset value (for example, a random value or a value set according to a specific rule). It should be noted that X may have different values in different cases. For example, when the terminal does not use an extended discontinuous reception (extended discontinuous reception, eDRX) mechanism, the value of X may be a constant 1. When the terminal uses an eDRX mechanism, the value of X may be a constant 2. This is not limited in this application.

In this embodiment of this application, the terminal may determine, based on the first identification information and the subgroup quantity corresponding to the first wake-up signal, the first terminal subgroup to which the terminal belongs in the following plurality of different manners.

Terminal identifier-based subgrouping manner 1:

The terminal determines, based on the first identification information, the subgroup quantity corresponding to the first wake-up signal, a quantity of paging frames in a paging cycle, a quantity of POs in one paging frame, and a subgroup quantity corresponding to the second wake-up signal or a preset value, the first terminal subgroup to which the terminal belongs.

In this subgrouping manner, when determining the first terminal subgroup to which the terminal belongs, the terminal may consider the subgroup quantity of terminal subgroups obtained through subgrouping for the second wake-up signal, or when terminal subgrouping is not supported for the second wake-up signal in the current cell, the terminal may determine, based on the preset value, the first terminal subgroup to which the terminal belongs.

The first terminal subgroup to which the terminal belongs corresponds to a first subgroup identifier.

For example, the first subgroup identifier satisfies:

$$\text{Subgroup ID1}=f(\text{UE\_ID1}/(N*Ns*K2))\bmod K1+M1 \qquad \text{Formula 1}$$

Subgroup ID1 is the first subgroup identifier, f() indicates a rounding operation, UE_ID1 is the first identification information, K1 is the subgroup quantity corresponding to the first wake-up signal, M1 is an offset parameter, N is the quantity of paging frames in the paging cycle of the terminal, Ns is the quantity of POs in one paging frame, and K2 is the subgroup quantity corresponding to the second wake-up signal or the preset value.

It should be noted that, when the current cell does not support terminal subgrouping for the second wake-up signal, a value of K2 is a preset value, for example, K2=1. Alternatively, when the current cell does not support terminal subgrouping for the second wake-up signal, K2 may not be included in Formula 1.

In Formula 1, the rounding operation indicated by f() includes but is not limited to a floor() rounding down operation, a cell() rounding up operation, and a round() rounding off operation. Alternatively, in Formula 1, the rounding operation may not be performed on UE_ID1/(N*Ns*K2).

In addition, the offset parameter indicated by M1 in Formula 1 may be a preset value, may be a randomly set value, or may be a value set according to a specific rule. Optionally, a value of M1 may be associated with a value of the K1. For example, M1=S1-K1, where S1 is a total subgroup quantity that corresponds to the first wake-up signal and that is supported by the network device. When K1 is a subgroup quantity that corresponds to the first wake-up signal and that is obtained through terminal identifier-based subgrouping, S1-K1 indicates a subgroup quantity that corresponds to the first wake-up signal and that is obtained through a type of subgrouping other than terminal identifier-based subgrouping (for example, when the network device supports two subgrouping mechanisms: terminal identifier-based subgrouping and network controlled subgrouping for the first wake-up signal, S1-K1 indicates a subgroup quantity that corresponds to the first wake-up signal and that is obtained through network controlled subgrouping). It should be noted that M1 may be 0. Alternatively, M1 may not be included in Formula 1.

In this embodiment of this application, when the terminal determines the first terminal subgroup to which the terminal belongs according to Formula 1, a parameter used may be notified by the network device, or a parameter used may be defined in a protocol, or a parameter used may be preconfigured by the network device. For example, the network device may notify the terminal of the parameter through broadcasting, or the network device may notify the terminal of the parameter by using dedicated signaling. The dedicated signaling includes but is not limited to RRC signaling, DCI signaling, and MAC CE signaling.

Optionally, in the terminal identifier-based subgrouping manner 1, the subgroup quantity that corresponds to the first wake-up signal and that is used by the terminal to determine the first terminal subgroup to which the terminal belongs may be the subgroup quantity that corresponds to the first wake-up signal and that is obtained through terminal identifier-based subgrouping (or may be referred to as a total subgroup quantity that corresponds to the first wake-up signal and that is obtained through terminal identifier-based subgrouping). Alternatively, the subgroup quantity that corresponds to the first wake-up signal and that is used by the terminal to determine the first terminal subgroup to which the terminal belongs may be a subgroup quantity, for one paging occasion PO, that corresponds to the first wake-up signal and that is obtained through terminal identifier-based subgrouping (or may be referred to as a total subgroup quantity that is for one paging occasion PO and that is obtained through terminal identifier-based subgrouping).

Optionally, in the terminal identifier-based subgrouping manner 1, the subgroup quantity that corresponds to the second wake-up signal and that is used by the terminal to determine the first terminal subgroup to which the terminal belongs may be the subgroup quantity that corresponds to the second wake-up signal and that is obtained through terminal identifier-based subgrouping (or may be referred to as a total subgroup quantity that corresponds to the second wake-up signal and that is obtained through terminal identifier-based subgrouping). Alternatively, the subgroup quantity that corresponds to the second wake-up signal and that is used by the terminal to determine the first terminal subgroup to which the terminal belongs may be a subgroup quantity, for one paging occasion PO, that corresponds to the second wake-up signal and that is obtained through terminal identifier-based subgrouping (or may be referred to as a total subgroup quantity, for one paging occasion PO, that corresponds to the second wake-up signal and that is obtained through terminal identifier-based subgrouping).

Terminal identifier-based subgrouping manner 2:

The terminal determines, based on the first identification information, the subgroup quantity corresponding to the first wake-up signal, a quantity of paging frames in a paging cycle, and a quantity of POs in one paging frame, the first terminal subgroup to which the terminal belongs.

The first terminal subgroup to which the terminal belongs corresponds to a first subgroup identifier.

For example, the first subgroup identifier satisfies:

$$\text{Subgroup ID1} = f(\text{UE\_ID1}/(N*Ns))\bmod K1 + M1 \qquad \text{Formula 2}$$

Subgroup ID1 is the first subgroup identifier, f() indicates a rounding operation, UE_ID1 is the first identification information, K1 is the subgroup quantity corresponding to the first wake-up signal, M1 is an offset parameter, N is a quantity of paging frames in a paging cycle of the terminal, and Ns is a quantity of POs in one paging frame.

In Formula 2, the rounding operation indicated by f() includes but is not limited to a floor() rounding down operation, a cell() rounding up operation, and a round() rounding off operation. Alternatively, in Formula 2, the rounding operation may not be performed on UE_ID1/(N*Ns).

In addition, for the offset parameter indicated by M1 in Formula 2, refer to the foregoing descriptions of M1 in Formula 1.

Optionally, in the terminal identifier-based subgrouping manner 2, the subgroup quantity that corresponds to the first wake-up signal and that is used by the terminal to determine the first terminal subgroup to which the terminal belongs may be the subgroup quantity that corresponds to the first wake-up signal and that is obtained through terminal identifier-based subgrouping (or may be referred to as a total subgroup quantity that corresponds to the first wake-up signal and that is obtained through terminal identifier-based subgrouping). Alternatively, the subgroup quantity that corresponds to the first wake-up signal and that is used by the terminal to determine the first terminal subgroup to which the terminal belongs may be a subgroup quantity, for one paging occasion PO, that corresponds to the first wake-up signal and that is obtained through terminal identifier-based subgrouping (or may be referred to as a total subgroup quantity that is for one paging occasion PO and that is obtained through terminal identifier-based subgrouping).

It should be noted that, in this embodiment of this application, when the terminal determines the first terminal subgroup to which the terminal belongs according to Formula 1 or Formula 2, a parameter used may be notified by the network device, or a parameter used may be defined in a protocol, or a parameter used may be preconfigured by the network device. For example, the network device may notify the terminal of the parameter through broadcasting, or the network device may notify the terminal of the parameter by using dedicated signaling. The dedicated signaling includes but is not limited to RRC signaling, DCI signaling, and MAC CE signaling.

2. For the first wake-up signal, the network device determines the terminal subgroup to which the terminal belongs.

For the first wake-up signal, the network device needs to determine a subgroup to which each terminal accessing the network device belongs, so that when the network device wakes up a terminal by using the first wake-up signal, the network device may indicate, by using the first indication information in the first wake-up signal, a terminal subgroup to which the woken terminal belongs.

In the following descriptions, any terminal accessing the network device is used for description. For the first wake-up signal, the terminal subgroup that is determined by the network device and to which the terminal belongs may be referred to as a first terminal subgroup.

Optionally, the network device determines, based on third identification information of the terminal and the subgroup quantity corresponding to the first wake-up signal, the first terminal subgroup to which the terminal belongs.

The third identification information of the terminal may be a terminal identifier of the terminal, or the third identification information may be identification information obtained by processing a terminal identifier of the terminal.

For example, the terminal identifier of the terminal may be a 5G-S-TMSI, an IMSI, or the like.

In an implementation, for a manner in which the network device in this embodiment of this application processes the terminal identifier of the terminal to obtain the third identification information, refer to the foregoing descriptions of the first identification information. Details are not described herein again.

In this embodiment of this application, the network device may determine, based on the third identification information and the subgroup quantity corresponding to the first wake-up signal, the first terminal subgroup to which the terminal belongs in the following different manners.

Terminal identifier-based subgrouping manner 1:

The network device determines, based on the third identification information, the subgroup quantity corresponding to the first wake-up signal, a quantity of paging frames in a paging cycle, a quantity of POs in one paging frame, and a subgroup quantity corresponding to the second wake-up signal or a preset value, the first terminal subgroup to which the terminal belongs.

In this subgrouping manner, when determining the first terminal subgroup to which the terminal belongs, the network device may consider the subgroup quantity of terminal subgroups obtained through subgrouping for the second wake-up signal, or when terminal subgrouping is not supported for the second wake-up signal in the current cell, the terminal may determine, based on the preset value, the first terminal subgroup to which the terminal belongs.

The first terminal subgroup to which the terminal belongs corresponds to a first subgroup identifier.

For example, the first subgroup identifier satisfies:

$$\text{Subgroup ID1} = f(\text{UE\_ID3}/(N*Ns*K2)) \bmod K1 + M1 \qquad \text{Formula 3}$$

Subgroup ID1 is the first subgroup identifier, f() indicates a rounding operation, UE_ID3 is the third identification information, K1 is the subgroup quantity corresponding to the first wake-up signal, M1 is an offset parameter, N is a quantity of paging frames in a paging cycle of the terminal, Ns is a quantity of POs in one paging frame, and K2 is the subgroup quantity corresponding to the second wake-up signal or a preset value.

It should be noted that, when the current cell does not support terminal subgrouping for the second wake-up signal, a value of K2 is a preset value, for example, K2=1. Alternatively, when the current cell does not support terminal subgrouping for the second wake-up signal, K2 may not be included in Formula 3.

In Formula 3, the rounding operation indicated by f() includes but is not limited to a floor() rounding down operation, a cell() rounding up operation, and a round() rounding off operation. Alternatively, in Formula 3, the rounding operation may not be performed on UE_ID3/(N*Ns*K2).

In addition, for the offset parameter indicated by M1 in Formula 3, refer to the foregoing descriptions of M1 in Formula 1.

Optionally, in the terminal identifier-based subgrouping manner 1, the subgroup quantity that corresponds to the first wake-up signal and that is used by the network device to determine the first terminal subgroup to which the terminal belongs may be the subgroup quantity that corresponds to the first wake-up signal and that is obtained through terminal identifier-based subgrouping (or may be referred to as a total subgroup quantity that corresponds to the first wake-up signal and that is obtained through terminal identifier-based subgrouping). Alternatively, the subgroup quantity that corresponds to the first wake-up signal and that is used by the network device to determine the first terminal subgroup to which the terminal belongs may be a subgroup quantity, for one paging occasion PO, that corresponds to the first wake-up signal and that is obtained through terminal identifier-based subgrouping (or may be referred to as a total subgroup quantity that is for one paging occasion PO and that is obtained through terminal identifier-based subgrouping).

Optionally, in the terminal identifier-based subgrouping manner 1, the subgroup quantity that corresponds to the second wake-up signal and that is used by the network device to determine the first terminal subgroup to which the terminal belongs may be the subgroup quantity that corresponds to the second wake-up signal and that is obtained through terminal identifier-based subgrouping (or may be referred to as a total subgroup quantity that corresponds to the second wake-up signal and that is obtained through terminal identifier-based subgrouping). Alternatively, the subgroup quantity that corresponds to the second wake-up signal and that is used by the network device to determine the first terminal subgroup to which the terminal belongs may be a subgroup quantity, for one paging occasion PO, that corresponds to the second wake-up signal and that is obtained through terminal identifier-based subgrouping (or may be referred to as a total subgroup quantity, for one paging occasion PO, that corresponds to the second wake-up signal and that is obtained through terminal identifier-based subgrouping).

Terminal identifier-based subgrouping manner 2:

The network device determines, based on the third identification information, the subgroup quantity corresponding to the first wake-up signal, a quantity of paging frames in a paging cycle, and a quantity of POs in one paging frame, the first terminal subgroup to which the terminal belongs.

The first terminal subgroup to which the terminal belongs corresponds to a first subgroup identifier.

For example, the first subgroup identifier satisfies:

$$\text{Subgroup ID1} = f(\text{UE\_ID3}/(N*Ns)) \bmod K1 + M1 \qquad \text{Formula 4}$$

Subgroup ID1 is the first subgroup identifier, f() indicates a rounding operation, UE_ID3 is the third identification information, K1 is the subgroup quantity corresponding to the first wake-up signal, M1 is an offset parameter, N is a quantity of paging frames in a paging cycle of the terminal, and Ns is a quantity of POs in one paging frame.

In Formula 4, the rounding operation indicated by f() includes but is not limited to a floor() rounding down operation, a cell() rounding up operation, and a round() rounding off operation. Alternatively, in Formula 4, the rounding operation may not be performed on UE_ID3/(N*Ns).

In addition, for the offset parameter indicated by M1 in Formula 4, refer to the foregoing descriptions of M1 in Formula 1.

Optionally, in the terminal identifier-based subgrouping manner 2, the subgroup quantity that corresponds to the first wake-up signal and that is used by the network device to determine the first terminal subgroup to which the terminal belongs may be the subgroup quantity that corresponds to the first wake-up signal and that is obtained through terminal identifier-based subgrouping (or may be referred to as a total subgroup quantity that corresponds to the first wake-up signal and that is obtained through terminal identifier-based subgrouping). Alternatively, the subgroup quantity that corresponds to the first wake-up signal and that is used by the network device to determine the first terminal subgroup to which the terminal belongs may be a subgroup quantity, for one paging occasion PO, that corresponds to the first wake-up signal and that is obtained through terminal identifier-based subgrouping (or may be referred to as a total subgroup quantity that is for one paging occasion PO and that is obtained through terminal identifier-based subgrouping).

It should be noted that, when both the terminal side and the network device side subgroup terminals based on terminal identifiers for the first wake-up signal, for a same terminal, it needs to be ensured that a first terminal subgroup to which the terminal belongs and that is determined on the terminal side is the same as a first terminal subgroup to which the terminal belongs and that is determined on the network device side. Based on this, when determining a subgroup to which a terminal belongs, the network device side and the terminal side need to agree on a terminal identifier-based subgrouping manner. For a same terminal, the network device side and the terminal side need to determine a first terminal subgroup to which the terminal belongs by using a same terminal identifier-based subgrouping manner. For example, for the first wake-up signal, if the terminal determines the first terminal subgroup to which the terminal belongs in the terminal identifier-based subgrouping manner 1, the network device also needs to determine the first terminal subgroup to which the terminal belongs in the terminal identifier-based subgrouping manner 1. A manner of agreement between the network device side and the terminal side may be a manner agreed on in a protocol, or a manner in which the network device delivers an indication.

(2) Network controlled subgrouping

When determining the terminal subgroup to which the terminal belongs for the first wake-up signal based on the network controlled subgrouping mechanism, the network device determines terminal subgroups to which all accessed terminals belong, and configures the terminal subgroup to which the terminal belongs for the terminal.

The network device may be an access network device or a core network device.

In the following descriptions, a case in which the network device determines a terminal subgroup to which any terminal accessing the network device belongs is used for description. For the first wake-up signal, the terminal subgroup that is determined by the network device and to which the terminal belongs may be referred to as a first terminal subgroup.

In a possible implementation, for the first wake-up signal, the network device determines, based on a feature of the terminal, the first terminal subgroup to which the terminal belongs.

For example, the feature of the terminal includes but is not limited to a probability that the terminal is paged, a type of the terminal, and a capability of the terminal.

The type of the terminal may include but is not limited to enhanced mobile broadband (enhanced mobile broadband, eMBB) UE, reduced capability (reduced capability, RedCap) UE, and IoT UE.

The capability of the terminal may include but is not limited to a bandwidth capability, a processing capability, a carrier quantity capability, and an antenna capability.

For example, the network device may subgroup terminals based on probabilities that the terminals are paged. Assuming that a subgroup quantity obtained through network controlled subgrouping for the first wake-up signal is 2, the network device may subgroup terminals whose paging probabilities are less than 50% into a subgroup 1, and subgroup terminals whose paging probabilities are not less than 50% into a subgroup 2.

After determining the first terminal subgroup, the network device sends first configuration information. The first configuration information indicates the first terminal subgroup to which the terminal belongs.

It should be noted that the first configuration information sent by the network device may explicitly indicate the first terminal subgroup to which the terminal belongs. For example, the first configuration information includes a subgroup identifier of the first terminal subgroup to which the terminal belongs. Alternatively, the first configuration information sent by the network device may implicitly indicate the first terminal subgroup to which the terminal belongs. For example, the first configuration information includes first attribute information of the first terminal subgroup to which the terminal belongs, and the first attribute information of the first terminal subgroup corresponds to the first subgroup identifier. For example, the first configuration information sent by the network device includes a high paging probability subgroup. After receiving the first configuration information, the terminal device may determine that a subgroup identifier corresponding to the high paging probability subgroup is a subgroup 1.

Correspondingly, after receiving the first configuration information, the terminal may determine, based on the first configuration information, the first terminal subgroup to which the terminal belongs.

**2. Terminal subgrouping method for the first wake-up signal**

For the second wake-up signal, a terminal subgrouping mechanism may include terminal identifier-based subgrouping and network controlled subgrouping. Network controlled subgrouping may be CN controlled subgrouping. A CN (for example, an AMF) is responsible for allocating a subgroup identifier of a subgroup to a terminal, and the subgroup identifier may be referred to as a CN subgroup ID. Terminal subgrouping based on a terminal identifier may be referred to as UE_ID subgrouping for short, and UE subgrouping controlled by the CN may be referred to as CN subgrouping for short.

For the second wake-up signal, one cell may support two subgrouping mechanisms. For example, the cell supports both terminal identifier-based subgrouping and network controlled subgrouping. Alternatively, one cell may support only one of the two subgrouping mechanisms. The terminal may determine a supporting status of a subgrouping mechanism in the current cell based on a subgroup-related parameter broadcast by the cell.

For example, if the cell broadcasts a total subgroup quantity N and a subgroup quantity M obtained through UE_ID-based subgrouping, and M<N, the cell supports both CN subgrouping and UE_ID subgrouping. A total quantity of subgroups obtained through CN subgrouping is N-M, and a total quantity of subgroups obtained through UE_ID subgrouping is M. If the cell broadcasts a total subgroup quantity N and a subgroup quantity M obtained through UE_ID subgrouping, and M=N, the cell supports only UE_ID subgrouping, and the quantity of subgroups obtained through UE_ID subgrouping is M=N. If the cell broadcasts only a total subgroup quantity N, the cell supports only CN subgrouping, and a total quantity of subgroups obtained through CN subgrouping is N. If the cell does not support the terminal subgrouping mechanism, the cell broadcasts a total subgroup quantity N and a subgroup quantity M obtained through UE_ID subgrouping, and M=N=1.

The following separately describes different subgrouping manners corresponding to the second wake-up signal.

(1) Terminal identifier-based subgrouping

In an implementation, in this embodiment of this application, for the second wake-up signal, the terminal side and the network device side need to determine a subgrouping status of terminal subgroups. For the terminal side, for the second wake-up signal, the terminal determines the second terminal subgroup to which the terminal belongs. For the network device side, for the second wake-up signal, the network device determines a terminal subgroup to which each terminal belongs, so that terminals included in each terminal subgroup can be further determined. The following separately provides descriptions.

1. For the second wake-up signal, the terminal determines the second terminal subgroup to which the terminal belongs.

Optionally, the terminal determines, based on second identification information of the terminal and a subgroup quantity corresponding to the second wake-up signal, the second terminal subgroup to which the terminal belongs.

The second identification information of the terminal may be a terminal identifier of the terminal, or the second identification information may be identification information obtained by processing a terminal identifier of the terminal.

For example, the terminal identifier of the terminal may be a 5G-S-TMSI, an IMSI, or the like.

In an implementation, for a case in which the second identification information is the identification information obtained by processing the terminal identifier of the terminal, in this embodiment of this application, the terminal identifier of the terminal may be processed in a plurality of different manners to obtain the second identification information of the terminal. For example, a modulo operation may be performed on the terminal identifier of the terminal to obtain the second identification information of the terminal. For example, $UE\_ID1 = id \bmod X$, where id is the terminal identifier of the terminal, for example, the 5G-S-TMSI or the IMSI, X is a constant, and a value of X may be a preset value (for example, a random value or a value set according to a specific rule). X may have different values in different cases. For example, when the terminal does not use an extended discontinuous reception (extended discontinuous reception, eDRX) mechanism, the value of X may be a constant 1. When the terminal uses an eDRX mechanism, the value of X may be a constant 2. This is not limited in this application. It should be noted that the value of X here may be the same as or different from the value of X used when processing the first identification information, or there may be an association relationship between the value of X used for processing the second identification and the value of X used for processing the first identification information.

In this embodiment of this application, the terminal may determine, based on the second identification information and the subgroup quantity corresponding to the second wake-up signal, the second terminal subgroup to which the terminal belongs in the following plurality of different manners.

Terminal identifier-based subgrouping manner 1:

The terminal determines, based on the second identification information, the subgroup quantity corresponding to the second wake-up signal, a quantity of paging frames in a paging cycle, a quantity of POs in one paging frame, and a subgroup quantity corresponding to the first wake-up signal or a preset value, the first terminal subgroup to which the terminal belongs.

In this subgrouping manner, when determining the second terminal subgroup to which the terminal belongs, the terminal may consider the subgroup quantity of terminal subgroups obtained through subgrouping for the first wake-up signal, or when terminal subgrouping is not supported for the first wake-up signal in the current cell, the terminal may determine, based on the preset value, the second terminal subgroup to which the terminal belongs.

The second terminal subgroup to which the terminal belongs corresponds to a second subgroup identifier.

For example, the second subgroup identifier satisfies:

$$\text{Subgroup ID2} = f(UE\_ID2/(N*Ns*K1)) \bmod K2 + M2 \qquad \text{Formula 5}$$

Subgroup ID2 is the second subgroup identifier, f() indicates a rounding operation, UE_ID2 is the second identification information, K2 is the subgroup quantity corresponding to the second wake-up signal, M2 is an offset parameter, N is a quantity of paging frames in a paging cycle of the terminal, Ns is a quantity of POs in one paging frame, and K1 is the subgroup quantity corresponding to the first wake-up signal or a preset value.

It should be noted that, when the current cell does not support terminal subgrouping for the first wake-up signal, a value of K1 is a preset value, for example, K1=1. Alternatively, when the current cell does not support terminal subgrouping for the first wake-up signal, K1 may not be included in Formula 5.

In Formula 5, the rounding operation indicated by f() includes but is not limited to a floor() rounding down operation, a cell() rounding up operation, and a round() rounding off operation. Alternatively, in Formula 5, the rounding operation may not be performed on UE_ID2/(N*Ns*KI).

In addition, the offset parameter indicated by M2 in Formula 5 may be a preset value, may be a randomly set value, or may be a value set according to a specific rule. Optionally, a value of M2 may be associated with a value of K2. For example, M2=S2-K2, where S2 is a total subgroup quantity that corresponds to the second wake-up signal and that is supported by the network device. When K2 is a subgroup quantity that corresponds to the second wake-up signal and that is obtained through terminal identifier-based subgrouping, S2-K2 indicates a subgroup quantity that corresponds to the second wake-up signal and that is obtained through a type of subgrouping other than terminal identifier-based subgrouping (for example, when the network device supports two subgrouping mechanisms: terminal identifier-based subgrouping and network controlled subgrouping for the second wake-up signal, S2-K2 indicates a subgroup quantity that corresponds to the second wake-up signal and that is obtained through network controlled subgrouping). It should be noted that M2 may be 0. Alternatively, M2 may not be included in Formula 5.

In this embodiment of this application, when the terminal determines the second terminal subgroup to which the terminal belongs according to Formula 5, a parameter used may be notified by the network device, or a parameter used may be defined in a protocol, or a parameter used may be preconfigured by the network device. For example, the network device may notify the terminal of the parameter through broadcasting, or the network device may notify the terminal of the parameter by using dedicated signaling. The dedicated signaling includes but is not limited to RRC signaling, DCI signaling, and MAC CE signaling.

Optionally, in the terminal identifier-based subgrouping manner 1, the subgroup quantity that corresponds to the second wake-up signal and that is used by the terminal to determine the second terminal subgroup to which the terminal belongs may be the subgroup quantity that corresponds to the second wake-up signal and that is obtained through terminal identifier-based subgrouping (or may be referred to as a total subgroup quantity that corresponds to the second wake-up signal and that is obtained through terminal identifier-based subgrouping). Alternatively, the subgroup quantity that corresponds to the second wake-up signal and that is used by the terminal to determine the second terminal subgroup to which the terminal belongs may be a subgroup quantity, for one paging occasion PO, that corresponds to the second wake-up signal and that is obtained through terminal identifier-based subgrouping (or may be referred to as a total subgroup quantity that is for one paging occasion PO and that is obtained through terminal identifier-based subgrouping).

Optionally, in the terminal identifier-based subgrouping manner 1, the subgroup quantity that corresponds to the first wake-up signal and that is used by the terminal to determine the second terminal subgroup to which the terminal belongs may be the subgroup quantity that corresponds to the first wake-up signal and that is obtained through terminal identifier-based subgrouping (or may be referred to as a total subgroup quantity that corresponds to the first wake-up signal and that is obtained through terminal identifier-based subgrouping). Alternatively, the subgroup quantity that corresponds to the first wake-up signal and that is used by the terminal to determine the second terminal subgroup to which the terminal belongs may be a subgroup quantity, for one paging occasion PO, that corresponds to the first wake-up signal and that is obtained through terminal identifier-based subgrouping (or may be referred to as a total subgroup quantity, for one paging occasion PO, that corresponds to the first wake-up signal and that is obtained through terminal identifier-based subgrouping).

Terminal identifier-based subgrouping manner 2:

The terminal determines, based on the second identification information, the subgroup quantity corresponding to the second wake-up signal, a quantity of paging frames in a paging cycle, and a quantity of POs in one paging frame, the second terminal subgroup to which the terminal belongs.

The second terminal subgroup to which the terminal belongs corresponds to a second subgroup identifier.

For example, the second subgroup identifier satisfies:

$$\text{Subgroup ID2} = f(\text{UE\_ID2}/(N*Ns)) \bmod K2 + M2 \quad \text{Formula 6}$$

Subgroup ID2 is the second subgroup identifier, f() indicates a rounding operation, UE_ID2 is the second identification information, K2 is the subgroup quantity corresponding to the second wake-up signal, M2 is an offset parameter, N is a quantity of paging frames in a paging cycle of the terminal, and Ns is a quantity of POs in one paging frame.

In Formula 6, the rounding operation indicated by f() includes but is not limited to a floor() rounding down operation, a cell() rounding up operation, and a round() rounding off operation. Alternatively, in Formula 6, the rounding operation may not be performed on UE_ID2/(N*Ns).

In addition, for the offset parameter indicated by M2 in Formula 6, refer to the foregoing descriptions of M2 in Formula 5.

Optionally, in the terminal identifier-based subgrouping manner 2, the subgroup quantity that corresponds to the second wake-up signal and that is used by the terminal to determine the second terminal subgroup to which the terminal belongs may be the subgroup quantity that corresponds to the second wake-up signal and that is obtained through terminal identifier-based subgrouping (or may be referred to as a total subgroup quantity that corresponds to the second wake-up signal and that is obtained through terminal identifier-based subgrouping). Alternatively, the subgroup quantity that corresponds to the second wake-up signal and that is used by the terminal to determine the second terminal subgroup to which the terminal belongs may be a subgroup quantity, for one paging occasion PO, that corresponds to the second wake-up signal and that is obtained through terminal identifier-based subgrouping (or may be referred to as a total subgroup quantity that is for one paging occasion PO and that is obtained through terminal identifier-based subgrouping).

It should be noted that, in this embodiment of this application, when the terminal determines the first terminal subgroup to which the terminal belongs according to Formula 5 or Formula 6, a parameter used may be notified by the network device, or a parameter used may be defined in a protocol, or a parameter used may be preconfigured by the network device. For example, the network device may notify the terminal of the parameter through broadcasting, or the network device may notify the terminal of the parameter by using dedicated signaling. The dedicated signaling includes but is not limited to RRC signaling, DCI signaling, and MAC CE signaling.

2. For the second wake-up signal, the network device determines the terminal subgroup to which the terminal belongs.

For the second wake-up signal, the network device needs to determine a subgroup to which each terminal accessing the network device belongs, so that when the network device wakes up a terminal by using the second wake-up signal, the network device may indicate, by using the second indication information in the second wake-up signal, a terminal subgroup to which a to-be-woken-up terminal belongs.

In the following descriptions, any terminal accessing the network device is used for description. For the second wake-up signal, the terminal subgroup that is determined by the network device and to which the terminal belongs may be referred to as a second terminal subgroup.

Optionally, the network device determines, based on fourth identification information of the terminal and the subgroup quantity corresponding to the second wake-up signal, the second terminal subgroup to which the terminal belongs.

The fourth identification information of the terminal may be a terminal identifier of the terminal, or the fourth identification information may be identification information obtained by processing a terminal identifier of the terminal.

For example, the terminal identifier of the terminal may be a 5G-S-TMSI, an IMSI, or the like.

In an implementation, for a manner in which the network device in this embodiment of this application processes the terminal identifier of the terminal to obtain the fourth identification information, refer to the foregoing descriptions of the first identification information. Details are not described herein again.

In this embodiment of this application, the network device may determine, based on the fourth identification information and the subgroup data corresponding to the second wake-up signal, the second terminal subgroup to which the terminal belongs in the following different manners.

Terminal identifier-based subgrouping manner 1:

The network device determines, based on the fourth identification information, the subgroup quantity corresponding to the second wake-up signal, a quantity of paging frames in a paging cycle, a quantity of POs in one paging frame, and a subgroup quantity corresponding to the first wake-up signal or a preset value, the second terminal subgroup to which the terminal belongs.

In this subgrouping manner, when determining the second terminal subgroup to which the terminal belongs, the network device may consider the subgroup quantity of terminal subgroups obtained through subgrouping for the first wake-up signal, or when terminal subgrouping is not supported for the first wake-up signal in the current cell, the network device may determine, based on the preset value, the second terminal subgroup to which the terminal belongs.

The second terminal subgroup to which the terminal belongs corresponds to a second subgroup identifier.

For example, the second subgroup identifier satisfies:

$$\text{Subgroup ID2}=f(\text{UE\_ID4}/(N*Ns*K1))\bmod K2+M2 \qquad \text{Formula 7}$$

Subgroup ID2 is the second subgroup identifier, f() indicates a rounding operation, UE_ID3 is the fourth identification information, K2 is the subgroup quantity corresponding to the second wake-up signal, M2 is an offset parameter, N is a quantity of paging frames in a paging cycle of the terminal, Ns is a quantity of POs in one paging frame, and K1 is the subgroup quantity corresponding to the second wake-up signal or a preset value.

It should be noted that, when the current cell does not support terminal subgrouping for the first wake-up signal, a value of K1 is a preset value, for example, K1=1. Alternatively, when the current cell does not support terminal subgrouping for the first wake-up signal, K1 may not be included in Formula 7.

In Formula 7, the rounding operation indicated by f() includes but is not limited to a floor() rounding down operation, a cell() rounding up operation, and a round() rounding off operation. Alternatively, in Formula 7, the rounding operation may not be performed on UE_ID4/(N*Ns*K1).

In addition, for the offset parameter indicated by M2 in Formula 7, refer to the foregoing descriptions of M2 in Formula 5.

Optionally, in the terminal identifier-based subgrouping manner 1, the subgroup quantity that corresponds to the second wake-up signal and that is used by the network device to determine the second terminal subgroup to which the terminal belongs may be the subgroup quantity that corresponds to the second wake-up signal and that is obtained through terminal identifier-based subgrouping (or may be referred to as a total subgroup quantity that corresponds to the second wake-up signal and that is obtained through terminal identifier-based subgrouping). Alternatively, the subgroup quantity that corresponds to the second wake-up signal and that is used by the network device to determine the second terminal subgroup to which the terminal belongs may be a subgroup quantity, for one paging occasion PO, that corresponds to the second wake-up signal and that is obtained through terminal identifier-based subgrouping (or may be referred to as a total subgroup quantity that is for one paging occasion PO and that is obtained through terminal identifier-based subgrouping).

Optionally, in the terminal identifier-based subgrouping manner 1, the subgroup quantity that corresponds to the first wake-up signal and that is used by the network device to determine the second terminal subgroup to which the terminal belongs may be the subgroup quantity that corresponds to the first wake-up signal and that is obtained through terminal identifier-based subgrouping (or may be referred to as a total subgroup quantity that corresponds to the first wake-up signal and that is obtained through terminal identifier-based subgrouping). Alternatively, the subgroup quantity that corresponds to the first wake-up signal and that is used by the network device to determine the second terminal subgroup to which the terminal belongs may be a subgroup quantity, for one paging occasion PO, that corresponds to the first wake-up signal and that is obtained through terminal identifier-based subgrouping (or may be referred to as a total subgroup quantity, for one paging occasion PO, that corresponds to the first wake-up signal and that is obtained through terminal identifier-based subgrouping).

Terminal identifier-based subgrouping manner 2:

The network device determines, based on the fourth identification information, the subgroup quantity corresponding to the second wake-up signal, a quantity of paging frames in a paging cycle, and a quantity of POs in one paging frame, the second terminal subgroup to which the terminal belongs.

The second terminal subgroup to which the terminal belongs corresponds to a second subgroup identifier.

For example, the second subgroup identifier satisfies:

$$\text{Subgroup ID2} = f(\text{UE\_ID4}/(N*Ns)) \bmod K2 + M2 \quad \text{Formula 8}$$

Subgroup ID2 is the second subgroup identifier, f() indicates a rounding operation, UE_ID4 is the fourth identification information, K2 is the subgroup quantity corresponding to the second wake-up signal, M2 is an offset parameter, N is a quantity of paging frames in a paging cycle of the terminal, and Ns is a quantity of POs in one paging frame.

In Formula 4, the rounding operation indicated by f() includes but is not limited to a floor() rounding down operation, a cell() rounding up operation, and a round() rounding off operation. Alternatively, in Formula 4, the rounding operation may not be performed on UE_ID4/(N*Ns).

In addition, for the offset parameter indicated by M2 in Formula 8, refer to the foregoing descriptions of M2 in Formula 5.

Optionally, in the terminal identifier-based subgrouping manner 2, the subgroup quantity that corresponds to the second wake-up signal and that is used by the network device to determine the second terminal subgroup to which the terminal belongs may be the subgroup quantity that corresponds to the second wake-up signal and that is obtained through terminal identifier-based subgrouping (or may be referred to as a total subgroup quantity that corresponds to the second wake-up signal and that is obtained through terminal identifier-based subgrouping). Alternatively, the subgroup quantity that corresponds to the second wake-up signal and that is used by the network device to determine the second terminal subgroup to which the terminal belongs may be a subgroup quantity, for one paging occasion PO, that corresponds to the second wake-up signal and that is obtained through terminal identifier-based subgrouping (or may be referred to as a total subgroup quantity that is for one paging occasion PO and that is obtained through terminal identifier-based subgrouping).

It should be noted that, when both the terminal side and the network device side subgroup terminals based on terminal identifiers for the second wake-up signal, for a same terminal, it needs to be ensured that a second terminal subgroup to which the terminal belongs and that is determined on the terminal side is the same as a second terminal subgroup to which the terminal belongs and that is determined on the network device side. Based on this, when determining a subgroup to which a terminal belongs, the network device side and the terminal side need to agree on a terminal identifier-based subgrouping manner. For a same terminal, the network device side and the terminal side need to determine a second terminal subgroup to which the terminal belongs by using a same terminal identifier-based subgrouping manner. For example, for the second wake-up signal, if the terminal determines the second terminal subgroup to which the terminal belongs in the terminal identifier-based subgrouping manner 1, the network device also needs to determine the second terminal subgroup to which the terminal belongs in the terminal identifier-based subgrouping manner 1. A manner of agreement between the network device side and the terminal side may be a manner agreed on in a protocol, or a manner in which the network device delivers an indication.

(2) Network controlled subgrouping

When determining the terminal subgroup to which the terminal belongs for the second wake-up signal based on the network controlled subgrouping mechanism, the network device determines terminal subgroups to which all accessed terminals belong, and configures the terminal subgroup to which the terminal belongs for the terminal.

The network device may be an access network device or a core network device.

In the following descriptions, a case in which the network device determines a terminal subgroup to which any terminal accessing the network device belongs is used for description. For the second wake-up signal, the terminal subgroup that is determined by the network device and to which the terminal belongs may be referred to as a second terminal subgroup.

In a possible implementation, for the second wake-up signal, the network device determines, based on a feature of the terminal, the second terminal subgroup to which the terminal belongs.

For example, the feature of the terminal includes but is not limited to a probability that the terminal is paged, a type of the terminal, and a capability of the terminal.

The type of the terminal may include eMBB UE, RedCap UE, and IoT UE.

The capability of the terminal may include but is not limited to a bandwidth capability, a processing capability, a carrier quantity capability, and an antenna capability.

After determining the second terminal subgroup to which the terminal belongs, the network device sends second configuration information. The second configuration information indicates the second terminal subgroup to which the terminal belongs for the second wake-up signal.

It should be noted that the second configuration information sent by the network device may explicitly indicate the second terminal subgroup to which the terminal belongs for the second wake-up signal. For example, the second configuration information includes a subgroup identifier of the second terminal subgroup to which the terminal belongs. Alternatively, the second configuration information sent by the network device may implicitly indicate the second terminal subgroup to which the terminal belongs. For example, the second configuration information includes second attribute information of the second terminal subgroup to which the terminal belongs, and the second attribute information of the second terminal subgroup corresponds to the second subgroup identifier. For example, the second configuration information sent by the network device includes a high paging probability subgroup. After receiving the second configuration information, the terminal device may determine that a subgroup identifier corresponding to the high paging probability subgroup is a subgroup 1.

Correspondingly, after receiving the second configuration information, the terminal may determine, based on the second configuration information, the second terminal subgroup to which the terminal belongs for the second wake-up signal.

In embodiments of this application, the foregoing describes a plurality of different terminal subgrouping manners on the terminal side and the network device side for the first wake-up signal, and a plurality of different terminal subgrouping manners on the terminal side and the network device side for the second wake-up signal. The terminal subgrouping manner for the first wake-up signal and the terminal subgrouping manner for the second wake-up signal may be independently implemented. For example, for the first wake-up signal, the terminal may determine the first terminal subgroup to which the terminal belongs by using any one of the terminal identifier-based subgrouping manner 1, the terminal identifier-based subgrouping manner 2, and the network controlled subgrouping manner. For the second wake-up signal, the terminal may determine the second terminal subgroup to which the terminal belongs by using any one of the terminal identifier-based subgrouping manner 1, the terminal identifier-based subgrouping manner 2, and the network controlled subgrouping manner. The subgrouping manner used by the terminal for the first wake-up signal and the subgrouping manner used for the second wake-up signal may be independent.

In addition, for a terminal that supports both a first wake-up signal mechanism and a second wake-up signal mechanism, an optional implementation is that when determining the terminal subgroup corresponding to the first wake-up signal and the terminal subgroup corresponding to the second wake-up signal, the terminal side and the network device side may consider an association between subgroups.

Optionally, the first terminal subgroup corresponding to the first wake-up signal and the second terminal subgroup corresponding to the second wake-up signal meet at least one of the following conditions.

Condition 1: A terminal included in the first terminal subgroup and a terminal included in the second terminal subgroup are not completely the same.

That the terminals included in the first terminal subgroup and the second terminal subgroup are not completely the same may be understood as that the terminals included in the first terminal subgroup and the terminals included in the second terminal subgroup may be partially the same or completely different.

For example, if the first terminal subgroup includes UE 1 and UE 2, and the second terminal subgroup includes UE 1 and UE 3, the terminals included in the first terminal subgroup and the terminal included in the second terminal subgroup is not completely the same. If the first terminal subgroup includes UE 1 and UE 2, and the second terminal subgroup includes UE 3 and UE 4, the terminals included in the first terminal subgroup and the terminal included in the second terminal subgroup is not completely the same.

Condition 2: A terminal included in the first terminal subgroup is not completely included in the second terminal subgroup.

That the terminal included in the first terminal subgroup is not completely included in the second terminal subgroup may be understood as that there is a terminal that is in the terminals included in the first terminal subgroup but is not included in the second terminal subgroup.

For example, if the first terminal subgroup includes UE 1 and UE 2, and the second terminal subgroup includes UE 1, UE 3, and UE 4. Because the UE 2 is not included in the second terminal subgroup, the terminal included in the first terminal subgroup is not completely included in the second terminal subgroup.

Condition 3: A terminal included in the second terminal subgroup is not completely included in the first terminal subgroup.

That the terminal included in the second terminal subgroup is not completely included in the first terminal subgroup may be understood as that there is a terminal that is in the terminals included in the second terminal subgroup but is not included in the first terminal subgroup.

For example, the first terminal subgroup includes UE 1, UE 2, and UE 3, and the second terminal subgroup includes UE 3 and UE 4. Because the UE 4 is not included in the first terminal subgroup, the terminal included in the second terminal subgroup is not completely included in the first terminal subgroup.

When the first terminal subgroup and the second terminal subgroup meet the at least one of the foregoing conditions, two wake-up signal mechanisms may be combined for sending. Because the terminals included in the first terminal subgroup and the terminal included in the second terminal subgroup is not completely the same, and/or there is no inclusion relationship between the first terminal subgroup and the second terminal subgroup, a two-level wake-up effect can be achieved. For example, the first wake-up signal indicates that a to-be-woken-up terminal subgroup includes UE 1 and UE 2. If the second wake-up signal indicates that a terminal subgroup that needs to monitor paging includes UE 1 and UE 3, only the UE 1 is finally woken up to monitor paging, and the UE 2 and the UE 3 do not need to monitor paging. This reduces a paging false alarm and reduces power consumption of a terminal. On the contrary, if the second wake-up signal indicates that a terminal subgroup that needs to monitor paging includes UE 1 and UE 2, terminals finally woken up to monitor paging are the UE 1 and the UE 2. This achieves an effect the same as an effect achieved by using one wake-up signal. However, signaling overheads are increased, and an additional signaling detection operation is required.

Based on this, when the terminal supports both the first wake-up signal mechanism and the second wake-up mechanism, a terminal subgrouping manner may be designed to further reduce a paging false alarm and power consumption of a terminal.

The following provides descriptions with reference to several specific embodiments. For example, the first wake-up signal may be an LP-WUS, and the second wake-up signal may be a PEI.

Embodiment 1: The terminal is subgrouped through terminal identifier-based subgrouping for both the first wake-up signal and the second wake-up signal.

In Embodiment 1, the terminal is subgrouped through terminal identifier-based subgrouping for the first wake-up signal. There is no limitation on that the terminal does not support another subgrouping mechanism for the first wake-up signal in the current cell. For example, the terminal may support both terminal identifier-based subgrouping and network controlled subgrouping for the first wake-up signal. However, in Embodiment 1, the terminal uses a terminal identifier-based subgrouping mechanism for the first wake-up signal. The terminal is subgrouped through terminal identifier-based subgrouping for the second wake-up signal. There is no limitation on that the terminal does not support another subgrouping mechanism for the second wake-up signal in the current cell. For example, the terminal may support both terminal identifier-based subgrouping and network controlled subgrouping for the second wake-up signal. However, in Embodiment 1, the terminal uses a terminal identifier-based subgrouping mechanism for the second wake-up signal.

In Embodiment 1, a supporting status of the current cell for a subgrouping mechanism is not limited. For example, the cell may further support network controlled subgrouping for the first wake-up signal. The cell may further support network controlled subgrouping for the second wake-up signal.

In an optional implementation, different terminal identifier-based subgrouping manners are used for the first wake-up signal and the second wake-up signal.

It should be noted that on the terminal side, different terminal identifier-based subgrouping manners are used for the first wake-up signal and the second wake-up signal. Correspondingly, on the network side, different terminal identifier-based subgrouping manners also need to be used for the first wake-up signal and the second wake-up signal. In addition, for a same terminal, the terminal side and the network side need to use a same terminal identifier-based subgrouping manner, to ensure that the terminal side and the network side determine a same terminal subgroup for the same terminal.

Because two different terminal identifier-based subgrouping manners are provided above for terminal identifier-based subgrouping, different terminal identifier-based subgrouping manners may be used when a terminal subgroup corresponding to the first wake-up signal and a terminal subgroup corresponding to the second wake-up signal are determined. The following provides descriptions by using an example.

Case 1:

For the first wake-up signal, the terminal determines the first terminal subgroup to which the terminal belongs according to Formula 1:

$$\text{Subgroup ID1} = f(\text{UE\_ID1}/(N*Ns*K2))\bmod K1 + M1 \quad \text{Formula 1}$$

Subgroup ID1 is the first subgroup identifier of the first terminal subgroup, f() indicates a rounding operation, UE_ID1 is the first identification information, K1 is the subgroup quantity corresponding to the first wake-up signal, M1 is an offset parameter, N is the quantity of paging frames in the paging cycle of the terminal, Ns is a quantity of POs in one paging frame, and K2 is the subgroup quantity corresponding to the second wake-up signal.

For example, UE_ID1 in Formula 1 may be the first identification information obtained by processing the terminal identifier id. For example, UE_ID1=id mod X1, where the id is a 5G-S-TMSI or an IMSI of the terminal.

For the second wake-up signal, the terminal determines the second terminal subgroup to which the terminal belongs according to Formula 6:

$$\text{Subgroup ID2} = f(\text{UE\_ID2}/(N*Ns))\bmod K2 + M2 \quad \text{Formula 6}$$

Subgroup ID2 is the second subgroup identifier of the second terminal subgroup, f() indicates a rounding operation, UE_ID2 is the second identification information, K2 is the subgroup quantity corresponding to the second wake-up signal, M2 is an offset parameter, N is the quantity of paging frames in the paging cycle of the terminal, and Ns is the quantity of POs in one paging frame.

For example, UE_ID2 in Formula 6 may be second identification information obtained by processing the terminal identifier id. For example, UE_ID2=id mod X2, where the id is a 5G-S-TMSI or an IMSI of the terminal.

Optionally, when the first terminal subgroup and the second terminal subgroup are terminal subgroups obtained through terminal identifier-based subgrouping, the first identification information is different from the second identification information.

In view of this, the X1 used to obtain the first identification information and the X2 used to obtain the second identification information in this embodiment of this application may be different values (for example, values of the X1 and X2 may be powers of 2). Optionally, there is an association relationship between the X1 and the X2. For example, there is a multiple relationship between the X1 and the X2. Optionally, X1=X2*K1, where K1 is the subgroup quantity corresponding to the first wake-up signal.

Case 2:

For the first wake-up signal, the terminal determines the first terminal subgroup to which the terminal belongs according to Formula 2:

$$\text{Subgroup ID1} = f(\text{UE\_ID1}/(N*Ns))\bmod K1 + M1 \quad \text{Formula 2}$$

Subgroup ID1 is the first subgroup identifier of the first terminal subgroup, f() indicates a rounding operation, UE_ID1 is the first identification information, K1 is the subgroup quantity corresponding to the first wake-up signal, M1 is an offset parameter, N is the quantity of paging frames in the paging cycle of the terminal, and Ns is the quantity of POs in one paging frame.

For example, UE_ID I in Formula 1 may be the first identification information obtained by processing the terminal identifier id. For example, UE_ID1=id mod X1, where the id is a 5G-S-TMSI or an IMSI of the terminal.

For the second wake-up signal, the terminal determines the second terminal subgroup to which the terminal belongs according to Formula 5:

$$\text{Subgroup ID2} = f(\text{UE\_ID2}/(N*Ns*K1))\bmod K2 + M2 \quad \text{Formula 5}$$

Subgroup ID2 is the second subgroup identifier of the second terminal subgroup, f() indicates a rounding operation, UE_ID2 is the second identification information, K2 is the subgroup quantity corresponding to the second wake-up signal, M2 is an offset parameter, N is the quantity of paging frames in the paging cycle of the terminal, Ns is a quantity of POs in one paging frame, and K1 is the subgroup quantity corresponding to the first wake-up signal.

For example, UE_ID2 in Formula 5 may be second identification information obtained by processing the terminal identifier id. For example, UE_ID2=id mod X2, where the id is a 5G-S-TMSI or an IMSI of the terminal.

Optionally, when the first terminal subgroup and the second terminal subgroup are terminal subgroups obtained through terminal identifier-based subgrouping, the first identification information is different from the second identification information.

In view of this, the X1 used to obtain the first identification information and the X2 used to obtain the second identification information in this embodiment of this application may be different values (for example, values of the X1 and X2 may be powers of 2). Optionally, there is an association relationship between the X1 and the X2. For example, there is a multiple relationship between the X1 and the X2. Optionally, X2=X1*K2, where K2 is the subgroup quantity corresponding to the second wake-up signal.

Correspondingly, for the terminal, the network device side also determines the first terminal subgroup to which the terminal belongs and the second terminal subgroup to which the terminal belongs in the manners in Case 1 and Case 2. Details are not described herein again.

Embodiment 2: The terminal is subgrouped through network controlled subgrouping for both the first wake-up signal and the second wake-up signal.

In Embodiment 2, the terminal is subgrouped network controlled subgrouping for the first wake-up signal. There is no limitation on that the terminal does not support another subgrouping mechanism for the first wake-up signal in the current cell. For example, the terminal may support both terminal identifier-based subgrouping and network controlled subgrouping for the first wake-up signal. However, in Embodiment 2, the terminal uses a network controlled subgrouping mechanism for the first wake-up signal. The terminal is subgrouped network controlled subgrouping for the second wake-up signal. There is no limitation on that the terminal does not support another subgrouping mechanism for the second wake-up signal in the current cell. For example, the terminal may support both terminal identifier-based subgrouping and network controlled subgrouping for the second wake-up signal. However, in Embodiment 2, the terminal uses a network controlled subgrouping mechanism for the second wake-up signal.

In Embodiment 2, a supporting status of the current cell for a subgrouping mechanism is not limited. For example, the cell may further support terminal identifier-based subgrouping for the first wake-up signal. The cell may further support terminal identifier-based subgrouping for the second wake-up signal.

In an optional implementation, the network device separately determines, based on a feature of the terminal, the first terminal subgroup to which the terminal belongs and the second terminal subgroup to which the terminal belongs.

Optionally, the first terminal subgroup and the second terminal subgroup are obtained through division based on different features of the terminal or obtained based on different division granularities of a same feature of the terminal.

Based on the foregoing subgrouping manner, for a same terminal, the first terminal subgroup to which the terminal belongs and the second terminal subgroup to which the terminal belongs may be different terminal subgroups.

For example, when determining the first terminal subgroup to which the terminal belongs, the network device may determine, based on a feature of a paging probability of the terminal, the first terminal subgroup to which the terminal belongs. When determining the second terminal subgroup to which the terminal belongs, the network device may determine, based on a feature of a terminal type of the terminal, the second terminal subgroup to which the terminal belongs.

Alternatively, the network device may determine, based on a same feature, for example, based on a feature of a paging probability of the terminal, the first terminal subgroup to which the terminal belongs and the second terminal subgroup to which the terminal belongs. However, for the first wake-up signal and the second wake-up signal, division granularities of the paging probability of the terminal are different. It is assumed that for the first wake-up signal, division granularities of the paging probability of the terminal are 0 to 50% and 50% to 100%, and for the second wake-up signal, division granularities of the paging probability of the terminal are 0 to 25%, 25% to 50%, 50% to 75%, and 75% to 100%.

It should be noted that the first terminal subgroup and the second terminal subgroup determined by the network device meet the at least one of the foregoing conditions, so that a two-level wake-up effect can be achieved, and a paging false alarm and power consumption of a terminal can be further reduced.

In an implementation, after determining the first terminal subgroup to which the terminal belongs, the network device sends the first configuration information, to indicate the first terminal subgroup to which the terminal belongs by using the first configuration information. After determining the second terminal subgroup to which the terminal belongs, the network device sends the second configuration information, to indicate the second terminal subgroup to which the terminal belongs by using the second configuration information.

Optionally, the network device may be an access network device or a core network device. When the first wake-up signal and the second wake-up signal are obtained through network controlled subgrouping, subgrouping for the first wake-up signal and the second wake-up signal may be controlled by different types of network devices. For example, subgrouping for the first wake-up signal (for example, the first wake-up signal is an LP-WUS) may be controlled by an access network device. Subgrouping for the second wake-up signal (for example, the second wake-up signal is a PEI) may be controlled by a core network device.

Correspondingly, the terminal determines, based on the received first configuration information, the first terminal subgroup to which the terminal belongs, and determines, based on the received second configuration information, the second terminal subgroup to which the terminal belongs.

Embodiment 3: The terminal is subgrouped through terminal identifier-based subgrouping for the first wake-up signal, and the terminal is subgrouped through network controlled subgrouping for the second wake-up signal.

In Embodiment 3, the terminal is subgrouped through terminal identifier-based subgrouping for the first wake-up signal. There is no limitation on that the terminal does not support another subgrouping mechanism for the first wake-up signal in the current cell. For example, the terminal may support both terminal identifier-based subgrouping and network controlled subgrouping for the first wake-up signal. However, in Embodiment 3, the terminal uses a terminal identifier-based subgrouping mechanism for the first wake-up signal. The terminal is subgrouped network controlled subgrouping for the second wake-up signal. There is no limitation on that the terminal does not support another subgrouping mechanism for the second wake-up signal in the current cell. For example, the terminal may support both terminal identifier-based subgrouping and network controlled subgrouping for the second wake-up signal. However, in Embodiment 3, the terminal uses a network controlled subgrouping mechanism for the second wake-up signal.

In Embodiment 3, a supporting status of the current cell for a subgrouping mechanism is not limited. For example, the cell may further support network controlled subgrouping for the first wake-up signal. The cell may further support terminal identifier-based subgrouping for the second wake-up signal.

For the first wake-up signal:

In an optional implementation, the terminal may determine the first terminal subgroup to which the terminal belongs according to Formula 1:

$$\text{Subgroup ID1}=f(\text{UE\_ID1}/(N*Ns*K2))\bmod K1+M1 \qquad \text{Formula 1}$$

Subgroup ID1 is the first subgroup identifier of the first terminal subgroup, f() indicates a rounding operation, UE_ID1 is the first identification information, K1 is the subgroup quantity corresponding to the first wake-up signal, M1 is an offset parameter, N is the quantity of paging frames in the paging cycle of the terminal, Ns is a quantity of POs in one paging frame, and K2 is the subgroup quantity corresponding to the second wake-up signal or a preset value.

Optionally, if the subgroup quantity corresponding to the second wake-up signal (for example, may be a subgroup quantity that corresponds to the second wake-up signal and that is obtained through terminal identifier-based subgrouping) is configured (for example, may be configured through broadcasting) in the current cell, K2 in Formula 1 is the subgroup quantity that corresponds to the second wake-up signal and that is broadcast by the cell. If the subgroup quantity corresponding to the second wake-up signal (for example, may be a subgroup quantity that corresponds to the second wake-up signal and that is obtained through terminal identifier-based subgrouping) is not configured in the current cell, a value of K2 is a preset value, for example, 1.

Optionally, a condition that the terminal determines the first terminal subgroup to which the terminal belongs according to Formula 1 may be that the current cell also supports terminal identifier-based subgrouping for the second wake-up signal.

For example, UE_ID l in Formula 1 may be the first identification information obtained by processing the terminal identifier id. For example, UE_ID1=id mod X1, where the id is a 5G-S-TMSI or an IMSI of the terminal.

Correspondingly, when determining the terminal subgroup to which the terminal belongs for the first wake-up signal, the network device may also determine the first terminal subgroup to which the terminal belongs by using Formula 1.

Alternatively, in another optional implementation, for the first wake-up signal, the terminal may determine the first terminal subgroup to which the terminal belongs according to Formula 2:

$$\text{Subgroup ID1}=f(\text{UE\_ID1}/(N*Ns))\bmod K1+M1 \qquad \text{Formula 2}$$

Subgroup ID1 is the first subgroup identifier of the first terminal subgroup, f() indicates a rounding operation, UE_ID1 is the first identification information, K1 is the subgroup quantity corresponding to the first wake-up signal, M1 is an offset parameter, N is the quantity of paging frames in the paging cycle of the terminal, and Ns is the quantity of POs in one paging frame.

Optionally, a condition that the terminal determines the first terminal subgroup to which the terminal belongs according to Formula 2 may be that the current cell does not support terminal identifier-based subgrouping for the second wake-up signal.

For example, UE_ID l in Formula 1 may be the first identification information obtained by processing the terminal identifier id. For example, UE_ID1=id mod X1, where the id is a 5G-S-TMSI or an IMSI of the terminal.

Correspondingly, when determining the terminal subgroup to which the terminal belongs for the first wake-up signal, the network device may also determine the first terminal subgroup to which the terminal belongs by using Formula 2.

For the second wake-up signal:

In an optional implementation, the network device determines, based on a feature of the terminal, the second terminal subgroup to which the terminal belongs.

For example, when determining the second terminal subgroup to which the terminal belongs for the second wake-up signal, the network device may determine, based on a feature of a terminal type of the terminal, the second terminal subgroup to which the terminal belongs.

After determining the second terminal subgroup to which the terminal belongs, the network device sends the second configuration information, to indicate the second terminal subgroup to which the terminal belongs by using the second configuration information.

Correspondingly, the terminal determines, based on the received second configuration information, the second terminal subgroup to which the terminal belongs.

Embodiment 4: The terminal is subgrouped through network controlled subgrouping for the first wake-up signal, and the terminal is subgrouped through terminal identifier-based subgrouping for the second wake-up signal.

In Embodiment 4, the terminal is subgrouped network controlled subgrouping for the first wake-up signal. There is no limitation on that the terminal does not support another subgrouping mechanism for the first wake-up signal in the current cell. For example, the terminal may support both terminal identifier-based subgrouping and network controlled subgrouping for the first wake-up signal. However, in Embodiment 4, the terminal uses a network controlled subgrouping mechanism for the first wake-up signal. The terminal is subgrouped through terminal identifier-based subgrouping for the second wake-up signal. There is no limitation on that the terminal does not support another subgrouping mechanism for the second wake-up signal in the current cell. For example, the terminal may support both terminal identifier-based subgrouping and network controlled subgrouping for the second wake-up signal. However, in Embodiment 4, the terminal uses a terminal identifier-based subgrouping mechanism for the second wake-up signal.

In Embodiment 4, a supporting status of the current cell for a subgrouping mechanism is not limited. For example, the cell may further support network controlled subgrouping for the first wake-up signal. The cell may further support terminal identifier-based subgrouping for the second wake-up signal.

For the first wake-up signal:

In an optional implementation, the network device determines, based on a feature of the terminal, the first terminal subgroup to which the terminal belongs.

For example, the network device may determine, based on a feature of a terminal capability of the terminal, the first terminal subgroup to which the terminal belongs.

After determining the first terminal subgroup to which the terminal belongs, the network device sends the first configuration information, to indicate the first terminal subgroup to which the terminal belongs by using the first configuration information.

Correspondingly, the terminal determines, based on the received first configuration information, the first terminal subgroup to which the terminal belongs.

For the second wake-up signal:

In an optional implementation, the terminal may determine the second terminal subgroup to which the terminal belongs according to Formula 5:

$$\text{Subgroup ID2} = f(\text{UE\_ID2}/(N*Ns*K1)) \bmod K2 + M2 \qquad \text{Formula 5}$$

Subgroup ID2 is the second subgroup identifier of the second terminal subgroup, f() indicates a rounding operation, UE_ID2 is the second identification information, K2 is the subgroup quantity corresponding to the second wake-up signal, M2 is an offset parameter, N is the quantity of paging frames in the paging cycle of the terminal, Ns is a quantity of POs in one paging frame, and K1 is the subgroup quantity corresponding to the first wake-up signal or a preset value.

Optionally, if the subgroup quantity corresponding to the first wake-up signal (for example, may be a subgroup quantity that corresponds to the first wake-up signal and that is obtained through terminal identifier-based subgrouping) is configured (for example, may be configured through broadcasting) in the current cell, K1 in Formula 5 is the subgroup quantity that corresponds to the first wake-up signal and that is broadcast by the cell. If the subgroup quantity corresponding to the first wake-up signal (for example, may be a subgroup quantity that corresponds to the first wake-up signal and that is obtained through terminal identifier-based subgrouping) is not configured in the current cell, a value of K1 is a preset value, for example, 1.

Optionally, a condition that the terminal determines the second terminal subgroup to which the terminal belongs according to Formula 5 may be that the current cell also supports terminal identifier-based subgrouping for the first wake-up signal.

For example, UE_ID2 in Formula 5 may be second identification information obtained by processing the terminal identifier id. For example, UE_ID2=id mod X2, where the id is a 5G-S-TMSI or an IMSI of the terminal.

Correspondingly, when determining the terminal subgroup to which the terminal belongs for the second wake-up signal, the network device may also determine the second terminal subgroup to which the terminal belongs by using Formula 5.

Alternatively, in another optional implementation, for the second wake-up signal, the terminal may determine the second terminal subgroup to which the terminal belongs according to Formula 6:

$$\text{Subgroup ID2} = f(UE\_ID2/(N*Ns)) \bmod K2 + M2 \quad \text{Formula 6}$$

Subgroup ID2 is the second subgroup identifier of the second terminal subgroup, f() indicates a rounding operation, UE_ID2 is the second identification information, K2 is the subgroup quantity corresponding to the second wake-up signal, M2 is an offset parameter, N is the quantity of paging frames in the paging cycle of the terminal, and Ns is the quantity of POs in one paging frame.

Optionally, a condition that the terminal determines the second terminal subgroup to which the terminal belongs according to Formula 6 may be that the current cell does not support terminal identifier-based subgrouping for the first wake-up signal.

For example, UE_ID2 in Formula 6 may be second identification information obtained by processing the terminal identifier id. For example, UE_ID2=id mod X2, where the id is a 5G-S-TMSI or an IMSI of the terminal.

Correspondingly, when determining the terminal subgroup to which the terminal belongs for the second wake-up signal, the network device may also determine the second terminal subgroup to which the terminal belongs by using Formula 6.

It should be noted that Formula 1 and Formula 5 are formulas obtained based on a normalization idea. In some cases, when the subgroup to which the terminal belongs is determined according to Formula 1, the value of K2 in Formula 1 may be the subgroup quantity corresponding to the second wake-up signal (for example, Embodiment 1). In other cases, the value of K2 in Formula 1 may be a preset value, for example, 1 (for example, Embodiment 3). To cover a plurality of different cases, in this embodiment of this application, Formula 1 is designed based on the normalization idea, and K2 in Formula 1 may have different values in different cases. Similarly, in some cases, when the subgroup to which the terminal belongs is determined according to Formula 5, the value of K1 in Formula 5 may be the subgroup quantity corresponding to the first wake-up signal (for example, Embodiment 1). In other cases, the value of K1 in Formula 5 may be a preset value, for example, 1 (for example, Embodiment 4). To cover a plurality of different cases, in this embodiment of this application, Formula 5 is designed based on the normalization idea, and K1 in Formula 5 may have different values in different cases.

It should be understood that in the foregoing embodiments, the terminal and/or the network device may perform a part or all of the steps in embodiments. These steps or operations are merely examples. Other operations or variations of various operations may be further performed in embodiments of this application. In addition, the steps may be performed in a sequence different from a sequence shown in embodiments, and not all of operations in embodiments of this application may be performed. In addition, sequence numbers of the steps do not mean an execution sequence. An execution sequence of the processes should be determined based on functions and internal logic of the processes, and should not constitute any limitation on the implementation processes of embodiments of this application.

Based on a same inventive concept as the method embodiments, an embodiment of this application provides a communication apparatus. A structure of the communication apparatus may be shown in FIG. 6. The communication apparatus includes a transceiver unit 601 and a processing unit 602.

In an implementation, the communication apparatus may be specifically used to implement the method performed by the terminal. The apparatus may be the terminal, or may be a chip or a chip set in the terminal or a part that is of the chip and that is configured to perform a related method function. The transceiver unit 601 is configured to receive a first wake-up signal. The first wake-up signal includes first indication information, the first indication information indicates that at least one first target terminal subgroup is to be woken up, and the at least one first target terminal subgroup includes a first terminal subgroup to which the terminal belongs. The processing unit 602 is configured to determine, based on the first indication information, that the terminal is to be woken up.

In a possible design, the first terminal subgroup is a terminal subgroup obtained through terminal identifier-based subgrouping. The processing unit 602 is configured to determine, based on the first identification information of the terminal and a subgroup quantity corresponding to the first wake-up signal, the first terminal subgroup to which the terminal belongs.

In a possible design, the first identification information is a terminal identifier of the terminal, or the first identification information is identification information obtained by processing a terminal identifier of the terminal.

In a possible design, the transceiver unit 601 is configured to receive a second wake-up signal. The second wake-up signal includes second indication information, the second indication information indicates at least one second target terminal subgroup to monitor paging, and the at least one second target terminal subgroup includes a second terminal subgroup to which the terminal belongs. The processing unit 602 is configured to monitor paging based on the second indication information.

In a possible design, the second terminal subgroup is a terminal subgroup obtained through terminal identifier-based subgrouping. The terminal determines, based on the second indication information of the terminal and a subgroup quantity corresponding to the second wake-up signal, the second terminal subgroup to which the terminal belongs.

In a possible design, the second identification information is the terminal identifier of the terminal, or the second identification information is identification information obtained by processing the terminal identifier of the terminal.

In a possible design, the first terminal subgroup corresponds to a first subgroup identifier, and the first subgroup identifier satisfies:

$$\text{Subgroup ID1} = f(\text{UE\_ID1}/(N*Ns*K2))\bmod K1 + M1.$$

Subgroup ID1 is the first subgroup identifier, f() indicates a rounding operation, UE_ID1 is the first identification information, K1 is the subgroup quantity corresponding to the first wake-up signal, M1 is an offset parameter, N is the quantity of paging frames in the paging cycle of the terminal, Ns is a quantity of POs in one paging frame, and K2 is the subgroup quantity corresponding to the second wake-up signal or the preset value.

In a possible design, the first terminal subgroup corresponds to a first subgroup identifier, and the first subgroup identifier satisfies:

$$\text{Subgroup ID1} = f(\text{UE\_ID1}/(N*Ns))\bmod K1 + M1.$$

Subgroup ID1 is the first subgroup identifier, f() indicates a rounding operation, UE_ID1 is the first identification information, K1 is the subgroup quantity corresponding to the first wake-up signal, M1 is an offset parameter, N is a quantity of paging frames in a paging cycle of the terminal, and Ns is a quantity of POs in one paging frame.

In a possible design, the second terminal subgroup corresponds to a second subgroup identifier, and the second subgroup identifier satisfies:

$$\text{Subgroup ID2} = f(\text{UE\_ID2}/(N*Ns))\bmod K2 + M2.$$

Subgroup ID2 is the second subgroup identifier, f() indicates a rounding operation, UE_ID2 is the second identification information, K2 is the subgroup quantity corresponding to the second wake-up signal, M2 is an offset parameter, N is a quantity of paging frames in a paging cycle of the terminal, and Ns is a quantity of POs in one paging frame.

In a possible design, the second terminal subgroup corresponds to a second subgroup identifier, and the second subgroup identifier satisfies:

$$\text{Subgroup ID2} = f(\text{UE\_ID2}/(N*Ns*K1))\bmod K2 + M2.$$

Subgroup ID2 is the second subgroup identifier, f() indicates a rounding operation, UE_ID2 is the second identification information, K2 is the subgroup quantity corresponding to the second wake-up signal, M2 is an offset parameter, N is a quantity of paging frames in a paging cycle of the terminal, Ns is a quantity of POs in one paging frame, and K1 is the subgroup quantity corresponding to the first wake-up signal or a preset value.

In a possible design, when the first terminal subgroup and the second terminal subgroup are terminal subgroups obtained through terminal identifier-based subgrouping, the first identification information is different from the second identification information.

In a possible design, the subgroup quantity corresponding to the first wake-up signal is a subgroup quantity that corresponds to the first wake-up signal and that is obtained through terminal identifier-based subgrouping. Alternatively, the subgroup quantity corresponding to the first wake-up signal is a subgroup quantity, for one paging occasion PO, that corresponds to the first wake-up signal and that is obtained through terminal identifier-based subgrouping.

In a possible design, the subgroup quantity corresponding to the second wake-up signal is a subgroup quantity that corresponds to the second wake-up signal and that is obtained through terminal identifier-based subgrouping. Alternatively, the subgroup quantity corresponding to the second wake-up signal is a subgroup quantity, for one paging occasion PO, that corresponds to the second wake-up signal and that is obtained through terminal identifier-based subgrouping.

In a possible design, the first terminal subgroup is a terminal subgroup obtained through network device controlled subgrouping. The transceiver unit 601 is configured to receive first configuration information, where the first configuration information indicates the first terminal subgroup to which the terminal belongs.

In a possible design, the first configuration information includes the first subgroup identifier corresponding to the first terminal subgroup. Alternatively, the first configuration information includes first attribute information of the first terminal subgroup, where the first attribute information corresponds to the first subgroup identifier.

In a possible design, the second terminal subgroup is a terminal subgroup obtained through network device controlled subgrouping. The transceiver unit 601 is configured to receive second configuration information, where the second configuration information indicates the second terminal subgroup to which the terminal belongs.

In a possible design, the second configuration information includes the second subgroup identifier corresponding to the second terminal subgroup. Alternatively, the second configuration information includes second attribute information of the second terminal subgroup, where the second attribute information corresponds to the second subgroup identifier.

In a possible design, if the first terminal subgroup and the second terminal subgroup are terminal subgroups obtained through network device controlled subgrouping, the first terminal subgroup and the second terminal subgroup are obtained through division based on different features of the terminal or obtained based on different division granularities of a same feature of the terminal.

In a possible design, the first terminal subgroup and the second terminal subgroup meet at least one of the following conditions:

A terminal included in the first terminal subgroup and a terminal included in the second terminal subgroup are not completely the same;

a first terminal included in the first terminal subgroup is not completely included in the second terminal subgroup; and

a second terminal included in the second terminal subgroup is not completely included in the first terminal subgroup.

In a possible design, the transceiver unit 601 is configured to receive the first wake-up signal by using a secondary communication module. The processing unit 602 is configured to determine that a main communication module of the terminal is to be woken up.

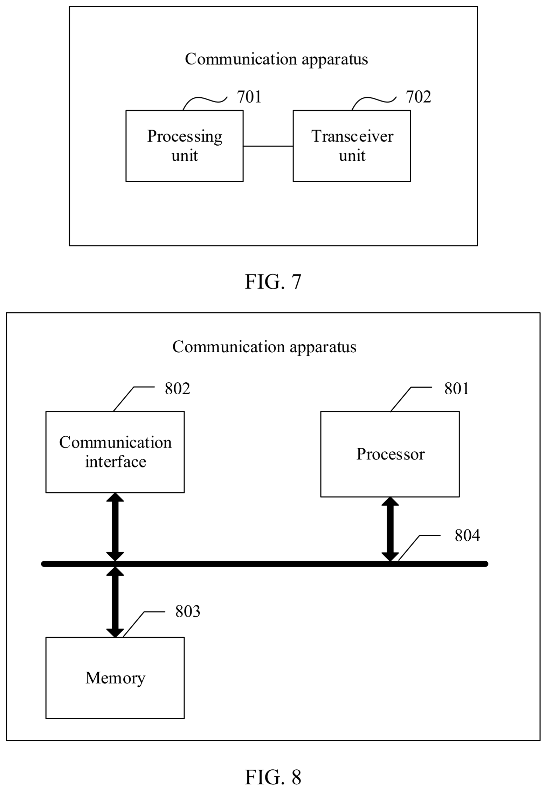

Based on a same inventive concept as the method embodiments, an embodiment of this application further provides a communication apparatus. A structure of the communication apparatus may be shown in FIG. 7. The communication apparatus includes a processing unit 701 and a transceiver unit 702. In an implementation, the communication apparatus may be specifically configured to implement the method performed by the network device. The apparatus may be the network device, or may be a chip or a chip set in the network device or a part that is of the chip and that is configured to perform a related method function. The processing unit 701 is configured to generate a first wake-up signal. The first wake-up signal includes first indication information, the first indication information indicates that at least one first target terminal subgroup is to be woken up, and the at least one first target terminal subgroup includes a first terminal subgroup to which a terminal belongs. The transceiver unit 702 is configured to send the first wake-up signal.

In a possible design, the first terminal subgroup is a terminal subgroup obtained through terminal identifier-based subgrouping. The first terminal subgroup to which the terminal belongs is determined based on third identification information of the terminal and a subgroup quantity corresponding to the first wake-up signal.

In a possible design, the third identification information is a terminal identifier of the terminal, or the third identification information is identification information obtained by processing a terminal identifier of the terminal.

In a possible design, the processing unit 701 is configured to generate a second wake-up signal. The second wake-up signal includes second indication information, the second indication information indicates at least one second target terminal subgroup to monitor paging, and the at least one second target terminal subgroup includes a second terminal subgroup to which the terminal belongs. The transceiver unit 702 is configured to send the second wake-up signal.

In a possible design, the second terminal subgroup is a terminal subgroup obtained through terminal identifier-based subgrouping. The second terminal subgroup that corresponds to the second wake-up signal and to which the terminal belongs is determined based on fourth identification information of the terminal and a subgroup quantity corresponding to the second wake-up signal.

In a possible design, the fourth identification information is a terminal identifier of the terminal, or the fourth identification information is identification information obtained by processing a terminal identifier of the terminal.

In a possible design, the first terminal subgroup corresponds to a first subgroup identifier, and the first subgroup identifier satisfies:

$$\text{Subgroup ID1} = f(UE\_ID3/(N*Ns*K2)) \bmod K1 + M1.$$

Subgroup ID1 is the first subgroup identifier, f() indicates a rounding operation, UE_ID3 is the third identification information, K1 is the subgroup quantity corresponding to the first wake-up signal, M1 is an offset parameter, N is a quantity of paging frames in a paging cycle of the terminal, Ns is a quantity of POs in one paging frame, and K2 is the subgroup quantity corresponding to the second wake-up signal or a preset value.

In a possible design, the first terminal subgroup corresponds to a first subgroup identifier, and the first subgroup identifier satisfies:

$$\text{Subgroup ID1}=f(\text{UE\_ID3}/(N*Ns))\bmod K1+M1.$$

Subgroup ID1 is the first subgroup identifier, f() indicates a rounding operation, UE_ID3 is the third identification information, K1 is the subgroup quantity corresponding to the first wake-up signal, M1 is an offset parameter, N is a quantity of paging frames in a paging cycle of the terminal, and Ns is a quantity of POs in one paging frame.

In a possible design, the second terminal subgroup corresponds to a second subgroup identifier, and the second subgroup identifier satisfies:

$$\text{Subgroup ID2}=f(\text{UE\_ID4}/(N*Ns))\bmod K2+M2.$$

Subgroup ID2 is the second subgroup identifier, f() indicates a rounding operation, UE_ID4 is the fourth identification information, K2 is the subgroup quantity corresponding to the second wake-up signal, M2 is an offset parameter, N is a quantity of paging frames in a paging cycle of the terminal, and Ns is a quantity of POs in one paging frame.

In a possible design, the second terminal subgroup corresponds to a second subgroup identifier, and the second subgroup identifier satisfies:

$$\text{Subgroup ID2}=f(\text{UE\_ID4}/(N*Ns*K1))\bmod K2+M2.$$

Subgroup ID2 is the second subgroup identifier, f() indicates a rounding operation, UE_ID4 is the fourth identification information, K2 is the subgroup quantity corresponding to the second wake-up signal, M2 is an offset parameter, N is a quantity of paging frames in a paging cycle of the terminal, Ns is a quantity of POs in one paging frame, and K1 is the subgroup quantity corresponding to the first wake-up signal or a preset value.

In a possible design, when the first terminal subgroup and the second terminal subgroup are terminal subgroups obtained through terminal identifier-based subgrouping, the third identification information is different from the fourth identification information.

In a possible design, the subgroup quantity corresponding to the first wake-up signal is a subgroup quantity that corresponds to the first wake-up signal and that is obtained through terminal identifier-based subgrouping. Alternatively, the subgroup quantity corresponding to the first wake-up signal is a subgroup quantity, for one paging occasion PO, that corresponds to the first wake-up signal and that is obtained through terminal identifier-based subgrouping.

In a possible design, the subgroup quantity corresponding to the second wake-up signal is a subgroup quantity that corresponds to the second wake-up signal and that is obtained through terminal identifier-based subgrouping. Alternatively, the subgroup quantity corresponding to the second wake-up signal is a subgroup quantity, for one paging occasion PO, that corresponds to the second wake-up signal and that is obtained through terminal identifier-based subgrouping.

In a possible design, the first terminal subgroup is a terminal subgroup obtained through network device controlled subgrouping. The transceiver unit 702 is configured to send first configuration information, where the first configuration information indicates the first terminal subgroup to which the terminal belongs.

In a possible design, the first configuration information includes the first subgroup identifier corresponding to the first terminal subgroup. Alternatively, the first configuration information includes first attribute information of the first terminal subgroup, where the first attribute information corresponds to the first subgroup identifier.

In a possible design, the second terminal subgroup is a terminal subgroup obtained through network device controlled subgrouping. The transceiver unit 702 is configured to send second configuration information, where the second configuration information indicates the second terminal subgroup to which the terminal belongs.

In a possible design, the second configuration information includes the subgroup identifier corresponding to the second terminal subgroup. Alternatively, the second configuration information includes second attribute information of the second terminal subgroup, where the second attribute information corresponds to the second subgroup identifier.

In a possible design, if the first terminal subgroup and the second terminal subgroup are terminal subgroups obtained through network device controlled subgrouping, the first terminal subgroup and the second terminal subgroup are obtained through division based on different features of the terminal or obtained based on different division granularities of a same feature of the terminal.

In a possible design, the first terminal subgroup and the second terminal subgroup meet at least one of the following conditions:

A terminal included in the first terminal subgroup and a terminal included in the second terminal subgroup are not completely the same;
a terminal included in the first terminal subgroup is not completely included in the second terminal subgroup; and
a terminal included in the second terminal subgroup is not completely included in the first terminal subgroup.

In embodiments of this application, division into the units is an example, is merely logical function division, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of software functional module. It may be understood that for functions or implementations of the units in embodiments of this application, further refer to related descriptions in the method embodiments.

In a possible manner, the communication apparatus may be shown in FIG. 8. The apparatus may be a communication device or a chip in the communication device. The communication device may be the terminal in the foregoing embodiments. The apparatus includes a processor 801 and a communication interface 802, and may further include a memory 803.

The processor 801 may be a CPU, a digital processing unit, or the like. The communication interface 802 may be a transceiver, an interface circuit like a transceiver circuit, a transceiver chip, or the like. The apparatus further includes a memory 803, configured to store a program executed by the processor 801. The memory 803 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory 803 is any other medium that can be configured to carry or store expected program code in a form of instructions or a data structure and that can be accessed by a computer, but is not limited thereto.

The processor 801 is configured to execute the program code stored in the memory 803, and is specifically configured to determine, based on the first indication information, that the terminal is to be woken up. The communication interface 802 is specifically configured to perform the actions of the transceiver unit 601. Details are not described herein again in this application.

A specific connection medium between the communication interface 802, the processor 801, and the memory 803 is not limited in embodiments of this application. In embodiments of this application, the memory 803, the processor 801, and the communication interface 802 are connected through a bus 804 in FIG. 8. The bus is indicated by using a bold line in FIG. 8. A connection manner between other components is merely an example for description, and is not limited thereto. Buses may be classified into an address bus, a data bus, a control bus, and the like. For ease of representation, only one thick line is for representing the bus in FIG. 8, but this does not mean that there is only one bus or only one type of bus.

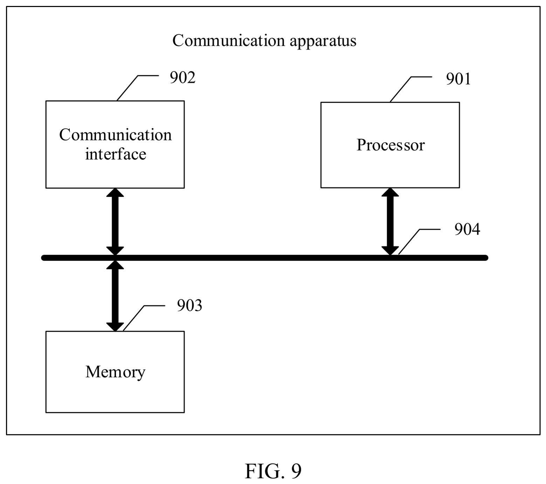

In a possible manner, the communication apparatus may be shown in FIG. 9. The apparatus may be a communication device or a chip in the communication device. The communication device may be the network device in the foregoing embodiments. The apparatus includes a processor 901 and a communication interface 902, and may further include a memory 903.

The processor 901 may be a CPU, a digital processing unit, or the like. The communication interface 902 may be a transceiver, an interface circuit like a transceiver circuit, a transceiver chip, or the like. The apparatus further includes a memory 903, configured to store a program executed by the processor 901. The memory 903 may be a nonvolatile memory like an HDD or an SSD, or may be a volatile memory like a RAM. The memory 903 is any other medium that can be configured to carry or store expected program code in a form of instructions or a data structure and that can be accessed by a computer, but is not limited thereto.

The processor 901 is configured to execute the program code stored in the memory 903, and is specifically configured to generate the first wake-up signal. The communication interface 902 is specifically configured to perform the actions of the transceiver unit 702. Details are not described herein again in this application.

A specific connection medium between the communication interface 902, the processor 901, and the memory 903 is not limited in embodiments of this application. In embodiments of this application, the memory 903, the processor 901, and the communication interface 902 are connected through a bus 904 in FIG. 9. The bus is indicated by using a bold line in FIG. 9. A connection manner between other components is merely an example for description, and is not limited thereto. Buses may be classified into an address bus, a data bus, a control bus, and the like. For ease of representation, only one thick line is for representing the bus in FIG. 9, but this does not mean that there is only one bus or only one type of bus.

An embodiment of this application further provides a communication method, including the steps performed by the terminal in the embodiment in FIG. 2 or FIG. 4.

An embodiment of this application further provides a communication method, including the steps performed by the network device in the embodiment in FIG. 2 or FIG. 4.

An embodiment of this application further provides a communication system, including a communication apparatus configured to implement functions of the terminal in the embodiment in FIG. 2 or FIG. 4 and a communication apparatus configured to implement functions of the network device in the embodiment in FIG. 2 or FIG. 4.

An embodiment of this application further provides a computer-readable storage medium, configured to store computer software instructions that need to be executed by the processor. The computer software instructions include a program that needs to be executed by the processor.

An embodiment of this application further provides a computer program product, including a computer program that needs to be executed by the processor.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that persons skilled in the art can make various modifications and variations to this application without departing from the protection scope of this application. This application is intended to cover these modifications and variations of this application provided that they fall within the scope of protection defined by the following claims and their equivalent technologies.

## Claims

1. A communication method, wherein the method comprises:

   receiving a first wake-up signal, wherein the first wake-up signal comprises first indication information, the first indication information indicates that at least one first target terminal subgroup is to be woken up, and the at least one first target terminal subgroup comprises a first terminal subgroup to which a terminal belongs; and
   determining, based on the first indication information, that the terminal is to be woken up.

2. The method according to claim 1, wherein the first terminal subgroup is a terminal subgroup obtained through terminal identifier-based subgrouping; and
   the method further comprises:
   determining, based on first identification information of the terminal and a subgroup quantity corresponding to the first wake-up signal, the first terminal subgroup to which the terminal belongs.

3. The method according to claim 2, wherein the first identification information is a terminal identifier of the terminal, or the first identification information is identification information obtained by processing a terminal identifier of the terminal.

4. The method according to any one of claims 1 to 3, wherein the method further comprises:

receiving a second wake-up signal, wherein the second wake-up signal comprises second indication information, the second indication information indicates at least one second target terminal subgroup to monitor paging, and the at least one second target terminal subgroup comprises a second terminal subgroup to which the terminal belongs; and
monitoring paging based on the second indication information.

5. The method according to claim 4, wherein the second terminal subgroup is a terminal subgroup obtained through terminal identifier-based subgrouping; and
the method further comprises:
determining the second terminal subgroup based on second identification information of the terminal and a subgroup quantity corresponding to the second wake-up signal.

6. The method according to claim 5, wherein the second identification information is the terminal identifier of the terminal, or the second identification information is identification information obtained by processing the terminal identifier of the terminal.

7. The method according to any one of claims 1 to 6, wherein the first terminal subgroup corresponds to a first subgroup identifier, and the first subgroup identifier satisfies:

$$\text{Subgroup ID1} = f(\text{UE\_ID1}/(N*Ns*K2)) \bmod K1 + M1, \text{ wherein}$$

Subgroup ID1 is the first subgroup identifier, f() indicates a rounding operation, UE_ID1 is the first identification information, K1 is the subgroup quantity corresponding to the first wake-up signal, M1 is an offset parameter, N is a quantity of paging frames in a paging cycle of the terminal, Ns is a quantity of POs in one paging frame, and K2 is the subgroup quantity corresponding to the second wake-up signal or a preset value.

8. The method according to any one of claims 1 to 6, wherein the first terminal subgroup corresponds to a first subgroup identifier, and the first subgroup identifier satisfies:

$$\text{Subgroup ID1} = f(\text{UE\_ID1}/(N*Ns)) \bmod K1 + M1,$$

wherein
Subgroup ID1 is the first subgroup identifier, f() indicates a rounding operation, UE_ID1 is the first identification information, K1 is the subgroup quantity corresponding to the first wake-up signal, M1 is an offset parameter, N is a quantity of paging frames in a paging cycle of the terminal, and Ns is a quantity of POs in one paging frame.

9. The method according to claim 7, wherein the second terminal subgroup corresponds to a second subgroup identifier, and the second subgroup identifier satisfies:

$$\text{Subgroup ID2} = f(\text{UE\_ID2}/(N*Ns)) \bmod K2 + M2,$$

wherein
Subgroup ID2 is the second subgroup identifier, f() indicates a rounding operation, UE_ID2 is the second identification information, K2 is the subgroup quantity corresponding to the second wake-up signal, M2 is an offset parameter, N is the quantity of paging frames in the paging cycle of the terminal, and Ns is the quantity of POs in one paging frame.

10. The method according to claim 8, wherein the second terminal subgroup corresponds to a second subgroup identifier, and the second subgroup identifier satisfies:

$$\text{Subgroup ID2} = f(\text{UE\_ID2}/(N*Ns*K1)) \bmod K2 + M2,$$

wherein
Subgroup ID2 is the second subgroup identifier, f() indicates a rounding operation, UE_ID2 is the second identification information, K2 is the subgroup quantity corresponding to the second wake-up signal, M2 is an offset parameter, N is the quantity of paging frames in the paging cycle of the terminal, Ns is the quantity of POs in one paging frame, and K1 is the subgroup quantity corresponding to the first wake-up signal or a preset value.

11. The method according to any one of claims 4 to 10, wherein when the first terminal subgroup and the second terminal subgroup are terminal subgroups obtained through terminal identifier-based subgrouping, the first identification information is different from the second identification information.

12. The method according to any one of claims 2, 3, 7, 8, and 10, wherein the subgroup quantity corresponding to the first wake-up signal is a subgroup quantity that corresponds to the first wake-up signal and that is obtained through terminal identifier-based subgrouping; or
the subgroup quantity corresponding to the first wake-up signal is a subgroup quantity, for one paging occasion PO, that corresponds to the first wake-up signal and that is obtained through terminal identifier-based subgrouping.

13. The method according to any one of claims 5, 6, 7, 9, and 10, wherein the subgroup quantity corresponding to the second wake-up signal is a subgroup quantity that corresponds to the second wake-up signal and that is obtained through terminal identifier-based subgrouping; or
the subgroup quantity corresponding to the second wake-up signal is a subgroup quantity, for one paging occasion PO, that corresponds to the second wake-up signal and that is obtained through terminal identifier-based subgrouping.

14. The method according to any one of claims 1 to 13, wherein the first terminal subgroup is a terminal subgroup obtained through network device controlled subgrouping; and
the method further comprises:
receiving first configuration information, wherein the first configuration information indicates the first terminal subgroup to which the terminal belongs.

15. The method according to claim 14, wherein the first configuration information comprises the first subgroup identifier corresponding to the first terminal subgroup; or the first configuration information comprises first attribute information of the first terminal subgroup, and the first attribute information corresponds to the first subgroup identifier.

16. The method according to claim 14 or 15, wherein the second terminal subgroup is a terminal subgroup obtained through network device controlled subgrouping; and
the method further comprises:
receiving second configuration information, wherein the second configuration information indicates the second terminal subgroup to which the terminal belongs.

17. The method according to claim 16, wherein the second configuration information comprises the second subgroup identifier corresponding to the second terminal subgroup, or the second configuration information comprises second attribute information of the second terminal subgroup, and the second attribute information corresponds to the second subgroup identifier.

18. The method according to any one of claims 14 to 16, wherein if the first terminal subgroup and the second terminal subgroup are terminal subgroups obtained through network device controlled subgrouping, the first terminal subgroup and the second terminal subgroup are obtained through division based on different features of the terminal or obtained based on different division granularities of a same feature of the terminal.

19. The method according to any one of claims 1 to 18, wherein
the first terminal subgroup and the second terminal subgroup meet at least one of the following conditions:

a terminal comprised in the first terminal subgroup and a terminal comprised in the second terminal subgroup are not completely the same;
a first terminal comprised in the first terminal subgroup is not completely comprised in the second terminal subgroup; and
a second terminal comprised in the second terminal subgroup is not completely comprised in the first terminal subgroup.

20. The method according to any one of claims 1 to 19, wherein receiving the first wake-up signal comprises:

receiving the first wake-up signal by using a secondary communication module; and
determining that the terminal is to be woken up comprises:
determining that a main communication module of the terminal is to be woken up.

21. A communication method, wherein the method comprises:

generating a first wake-up signal, wherein the first wake-up signal comprises first indication information, the first indication information indicates that at least one first target terminal subgroup is to be woken up, and the at least one first target terminal subgroup comprises a first terminal subgroup to which a terminal belongs; and
sending the first wake-up signal.

22. The method according to claim 21, wherein the first terminal subgroup is a terminal subgroup obtained through terminal identifier-based subgrouping; and
the method further comprises:
determining, based on third identification information of the terminal and a subgroup quantity corresponding to the first wake-up signal, the first terminal subgroup to which the terminal belongs.

23. The method according to claim 22, wherein the third identification information is a terminal identifier of the terminal, or the third identification information is identification information obtained by processing a terminal identifier of the terminal.

24. The method according to any one of claims 21 to 23, wherein the method further comprises:

generating a second wake-up signal, wherein the second wake-up signal comprises second indication information, the second indication information indicates at least one second target terminal subgroup to monitor paging, and the at least one second target terminal subgroup comprises a second terminal subgroup to which the terminal belongs; and
sending the second wake-up signal.

25. The method according to claim 24, wherein the second terminal subgroup is a terminal subgroup obtained through terminal identifier-based subgrouping; and
the method further comprises:
determining, based on fourth identification information of the terminal and a subgroup quantity corresponding to the second wake-up signal, the second terminal subgroup to which the terminal belongs.

26. The method according to claim 25, wherein the fourth identification information is the terminal identifier of the terminal, or the fourth identification information is identification information obtained by processing the terminal identifier of the terminal.

27. The method according to any one of claims 21 to 26, wherein the first terminal subgroup corresponds to a first subgroup identifier, and the first subgroup identifier satisfies:

$$\text{Subgroup ID1}=f(\text{UE\_ID3}/(N*Ns*K2))\bmod K1+M1,$$

wherein
Subgroup ID1 is the first subgroup identifier, f() indicates a rounding operation, UE_ID3 is the third identification information, K1 is the subgroup quantity corresponding to the first wake-up signal, M1 is an offset parameter, N is a quantity of paging frames in a paging cycle of the terminal, Ns is a quantity of POs in one paging frame, and K2 is the subgroup quantity corresponding to the second wake-up signal or a preset value.

28. The method according to any one of claims 21 to 26, wherein the first terminal subgroup corresponds to a first subgroup identifier, and the first subgroup identifier satisfies:

$$\text{Subgroup ID1}=f(\text{UE\_ID3}/(N*Ns))\bmod K1+M1,$$

wherein

Subgroup ID1 is the first subgroup identifier, f() indicates a rounding operation, UE_ID3 is the third identification information, K1 is the subgroup quantity corresponding to the first wake-up signal, M1 is an offset parameter, N is a quantity of paging frames in a paging cycle of the terminal, and Ns is a quantity of POs in one paging frame.

29. The method according to claim 27, wherein the second terminal subgroup corresponds to a second subgroup identifier, and the second subgroup identifier satisfies:

$$\text{Subgroup ID2} = f(UE\_ID4/(N*Ns)) \bmod K2 + M2,$$

wherein
Subgroup ID2 is the second subgroup identifier, f() indicates a rounding operation, UE_ID4 is the fourth identification information, K2 is the subgroup quantity corresponding to the second wake-up signal, M2 is an offset parameter, N is the quantity of paging frames in the paging cycle of the terminal, and Ns is the quantity of POs in one paging frame.

30. The method according to claim 28, wherein the second terminal subgroup corresponds to a second subgroup identifier, and the second subgroup identifier satisfies:

$$\text{Subgroup ID2} = f(UE\_ID4/(N*Ns*K1)) \bmod K2 + M2,$$

wherein
Subgroup ID2 is the second subgroup identifier, f() indicates a rounding operation, UE_ID4 is the fourth identification information, K2 is the subgroup quantity corresponding to the second wake-up signal, M2 is an offset parameter, N is the quantity of paging frames in the paging cycle of the terminal, Ns is the quantity of POs in one paging frame, and K1 is the subgroup quantity corresponding to the first wake-up signal or a preset value.

31. The method according to any one of claims 24 to 30, wherein when the first terminal subgroup and the second terminal subgroup are terminal subgroups obtained through terminal identifier-based subgrouping, the third identification information is different from the fourth identification information.

32. The method according to any one of claims 22, 23, 27, 28, and 30, wherein the subgroup quantity corresponding to the first wake-up signal is a subgroup quantity that corresponds to the first wake-up signal and that is obtained through terminal identifier-based subgrouping; or
the subgroup quantity corresponding to the first wake-up signal is a subgroup quantity, for one paging occasion PO, that corresponds to the first wake-up signal and that is obtained through terminal identifier-based subgrouping.

33. The method according to any one of claims 25, 26, 27, 29, and 30, wherein the subgroup quantity corresponding to the second wake-up signal is a subgroup quantity that corresponds to the second wake-up signal and that is obtained through terminal identifier-based subgrouping; or
the subgroup quantity corresponding to the second wake-up signal is a subgroup quantity, for one paging occasion PO, that corresponds to the second wake-up signal and that is obtained through terminal identifier-based subgrouping.

34. The method according to any one of claims 21 to 33, wherein the first terminal subgroup is a terminal subgroup obtained through network device controlled subgrouping; and
the method further comprises:
sending first configuration information, wherein the first configuration information indicates the first terminal subgroup to which the terminal belongs.

35. The method according to claim 34, wherein the first configuration information comprises the first subgroup identifier corresponding to the first terminal subgroup; or the first configuration information comprises first attribute information of the first terminal subgroup, and the first attribute information corresponds to the first subgroup identifier.

36. The method according to claim 34 or 35, wherein the second terminal subgroup is a terminal subgroup obtained through network device controlled subgrouping; and
the method further comprises:
sending second configuration information, wherein the second configuration information indicates the second terminal subgroup to which the terminal belongs.

37. The method according to claim 36, wherein the second configuration information comprises the subgroup identifier corresponding to the second terminal subgroup, or the second configuration information comprises second attribute information of the second terminal subgroup, and the second attribute information corresponds to the second subgroup identifier.

38. The method according to any one of claims 34 to 36, wherein if the first terminal subgroup and the second terminal subgroup are terminal subgroups obtained through network device controlled subgrouping, the first terminal subgroup and the second terminal subgroup are obtained through division based on different features of the terminal or obtained based on different division granularities of a same feature of the terminal.

39. The method according to any one of claims 21 to 38, wherein
the first terminal subgroup and the second terminal subgroup meet at least one of the following conditions:

a terminal comprised in the first terminal subgroup and a terminal comprised in the second terminal subgroup are not completely the same;
the terminal comprised in the first terminal subgroup is not completely comprised in the second terminal subgroup; and
the terminal comprised in the second terminal subgroup is not completely comprised in the first terminal subgroup.

40. A communication apparatus, comprising a module configured to perform the method according to any one of claims 1 to 20, or a module configured to perform the method according to any one of claims 21 to 39.

41. A computer-readable storage medium, storing a computer program or instructions, wherein when the computer program or the instructions are run on a computer, the computer-readable storage medium is enabled to implement the method according to any one of claims 1 to 20, or the computer-readable storage medium is enabled to implement the method according to any one of claims 21 to 39.

42. A computer program product, comprising a computer program, wherein when the computer program is executed by a communication apparatus, the method according to any one of claims 1 to 20 is implemented, or when the computer program is executed by a communication apparatus, the method according to any one of claims 21 to 39 is implemented.

43. A communication apparatus, comprising a processor, wherein the processor is configured to perform the method according to any one of claims 1 to 20, or perform the method according to any one of claims 21 to 39.

Core network device

Core network device

NG

NG NG NG

NG NG

Access network device

Xn

Access network device

Uu

Terminal

Uu

Xn

Access network device

Xn

Access network device

Xn

Uu

Terminal

Uu

Terminal

Uu

Terminal

Terminal

FIG. 1

| Network device | Terminal |
|---|---|

Step 201: Send a first wake-up signal

Step 202: Determine, based on first indication information in the first wake-up signal, that the terminal is to be woken up

FIG. 2

Main
communication
module

Wake-up

First wake-up
signal

Secondary
communication
module

FIG. 3

| Network device | | Terminal |
| --- | --- | --- |

Step 401: Send a second wake-up signal

Step 402: Monitor paging
based on second indication
information in the second
wake-up signal

FIG. 4

First wake-up signal     Second wake-up signal

PO

Main
communication
module MR

Secondary
communication
module LR

The main communication
module of the terminal monitors
the second wake-up signal

The main
communication
module of the
terminal is woken up

The secondary
communication
module of a terminal
monitors the first
wake-up signal

FIG. 5

Communication apparatus

601

Transceiver
unit

602

Processing
unit

FIG. 6

Communication apparatus

701

Processing
unit

702

Transceiver
unit

FIG. 7

Communication apparatus

802

Communication
interface

801

Processor

804

803

Memory

FIG. 8

Communication apparatus

902

Communication
interface

901

Processor

904

903

Memory

FIG. 9

## INTERNATIONAL SEARCH REPORT

| International application No. |
| --- |
| **PCT/CN2024/089749** |

| A. | CLASSIFICATION OF SUBJECT MATTER |
| --- | --- |

H04W52/02(2009.01)i; H04W68/02(2009.01)i

According to International Patent Classification (IPC) or to both national classification and IPC

| B. | FIELDS SEARCHED |
| --- | --- |

Minimum documentation searched (classification system followed by classification symbols)

IPC: H04W, H04Q, H04L

Documentation searched other than minimum documentation to the extent that such documents are included in the fields searched

Electronic data base consulted during the international search (name of data base and, where practicable, search terms used)

3GPP, CNTXT, DWPI, ENTXTC, WPABS, WPABSC, CNKI, IEEE: 唤醒, 主, 接收, 通信, 寻呼, 终端, 组, awake, wake, PEI, WUS, main, primary, circuit, communication, receiv+, paging, group, UE

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109429314 A (HUAWEI TECHNOLOGIES CO., LTD.) 05 March 2019 (2019-03-05) description, paragraphs 87-168 | 1-3, 12, 14-15, 20-23, 32, 34-35, 40-43 |
| X | WO 2023051321 A1 (HUAWEI TECHNOLOGIES CO., LTD.) 06 April 2023 (2023-04-06) description, paragraphs 142-153 | 1-3, 12, 14-15, 20-23, 32, 34-35, 40-43 |
| X | WO 2019051953 A1 (HUAWEI TECHNOLOGIES CO., LTD.) 21 March 2019 (2019-03-21) description, pages 20-21 | 1-3, 12, 14-15, 20-23, 32, 34-35, 40-43 |
| A | WO 2023029031 A1 (APPLE INC.; ZHANG YUSHU;) 09 March 2023 (2023-03-09) entire document | 1-43 |
| A | CN 116095794 A (HUAWEI TECHNOLOGIES CO., LTD.) 09 May 2023 (2023-05-09) entire document | 1-43 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 July 2024** | **04 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | | | | | International application No. |
| --- | --- | --- | --- | --- | --- | --- |
| Information on patent family members | | | | | | **PCT/CN2024/089749** |

| Patent document cited in search report | | | Publication date (day/month/year) | Patent family member(s) | | | Publication date (day/month/year) |
| --- | --- | --- | --- | --- | --- | --- | --- |
| CN | 109429314 | A | 05 March 2019 | MX | 2020002115 | A | 18 September 2020 |
| | | | | US | 2020196239 | A1 | 18 June 2020 |
| | | | | US | 11252662 | B2 | 15 February 2022 |
| | | | | EP | 3668191 | A1 | 17 June 2020 |
| | | | | EP | 3668191 | A4 | 06 January 2021 |
| | | | | JP | 2020532233 | A | 05 November 2020 |
| | | | | JP | 7199422 | B2 | 05 January 2023 |
| | | | | WO | 2019037747 | A1 | 28 February 2019 |
| WO | 2023051321 | A1 | 06 April 2023 | CN | 115884330 | A | 31 March 2023 |
| WO | 2019051953 | A1 | 21 March 2019 | CN | 109964511 | A | 02 July 2019 |
| WO | 2023029031 | A1 | 09 March 2023 | EP | 4385251 | A1 | 19 June 2024 |
| | | | | KR | 20240039223 | A | 26 March 2024 |
| | | | | US | 2023276361 | A1 | 31 August 2023 |
| CN | 116095794 | A | 09 May 2023 | WO | 2023078242 | A1 | 11 May 2023 |

Form PCT/ISA/210 (patent family annex) (July 2022)

**EP 4 708 977 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310541373